# EUROPEAN PATENT SPECIFICATION

(11) **EP 4 084 413 B1**
(45) Date of publication and mention of the grant of the patent: **28.02.2024**
(21) Application number: 21171242.7
(22) Date of filing: 29.04.2021
(51) Int. Cl.: H04L 41/147, H04L 41/14, G05B 17/00, G05B 19/40

(54) **A METHOD AND SYSTEM FOR PREDICTING THE EVOLUTION OF SIMULATION RESULTS FOR AN INTERNET OF THINGS NETWORK**
VERFAHREN UND SYSTEM ZUR VORHERSAGE DER ENTWICKLUNG VON SIMULATIONSERGEBNISSEN FÜR EIN INTERNET-DER-DINGE-NETZWERK
PROCÉDÉ ET SYSTÈME POUR PRÉDIRE L'ÉVOLUTION DE RÉSULTATS DE SIMULATION POUR UN RÉSEAU D'INTERNET DES OBJETS

(43) Date of publication of application: 02.11.2022
(73) Proprietor: FUJITSU LIMITED, Kanagawa 211-8588 (JP)
(72) Inventor: van den BERGHE, Sven, Marlow, SL7 3LE (GB)
(74) Representative: Haseltine Lake Kempner LLP

(56) References cited:
- US-A1- 2018 054 376
- US-A1- 2019 294 975
- US-A1- 2019 294 978

## Description

### Field of the Invention

The present invention relates to simulation (modelling) of a network of objects in the Internet of Things (IoT). The loT refers to the interconnection via the Internet (and potentially other networks) of computing devices embedded in everyday objects, enabling them to send and receive data. The present application uses the concept of digital twins (DTs), which are virtual (mathematical) models that reflect the current state of an object being modelled, using data input to its counterpart object. The digital twin is updated and changes as the counterpart object is updated and changes, for example to reflect a new state (variable result of the inputs, describing the status), such as a working condition and/or position.

### Background of the Invention

One example of the use of digital twins is in managing transport such as in smart cities, but there are other many applications, for example in power networks, to ensure a balanced supply of power across a wide area.

Taking the example of transport, smart traffic systems (or Intelligent Transportation Systems (ITS)) used to regulate traffic by linking data from sensors and traffic signals have the promise to make transport better (more reliable, more efficient, safer, faster) by optimising the operation of the whole system including roads, road-side infrastructure, vehicles, pedestrians etc. These systems combine data generated by the sensors (in suitable positions in the system such as in vehicles, on travellers, and in the infrastructure) and data from other sources (for example weather data and/or social data) using big data technologies and Machine Learning (ML).

Prior art document US 2019/294975 A1 relates to a computer-implemented method performed by a digital twin at a computing device in a communications network. The method comprises: receiving at least one stream of event data observed from the environment; computing at least one schema from the stream of event data, the schema being a concise representation of the stream of event data; participating in a distributed inference process by sending information about the schema or the received event stream to at least one other digital twin in the communications network and receiving information about schemas or received event streams from the other digital twin; computing comparisons of the sent and received information; and aggregating the digital twin and the other digital twin, or defining a relationship between the digital twin and the other digital twin on the basis of the comparison.

### Statements of Invention

To deliver the promise of better transport, smart traffic systems have to deliver a wide range of services to diverse users at scale (there may be thousands or more users) and in real-time (fast enough to take effective action).

This proposal relates to the concept of Pipelined Digital Twin Sequences, which form the subject-matter of related European patent application publication number EP3985925 A1. Consider an executing a Pipelined Digital Twin Sequence; through, say, a management interface, a (potential) problem may be identified, and it may be decided to intervene in the system to reduce the impact of the problem.

For example, if the monitored system is a public transport bus network, incidents could occur where some road is blocked on one of the bus routes. The public transport system managers would like to ensure service continuity by rerouting buses around the blocked road. There will be a number of different options for rerouting with different impacts on changes to journey time and the number of missed stops (missed stops strand some passengers).

The requirement is to manage incidents occurring in large evolving systems such as transport systems, smart cities or power networks which produce large amounts of sensor data from real time sensed data streaming from sources on or serving the system. Responses to the incidents need to be created in "real time" - fast enough for immediate action to be taken by the users of the services. There are diverse data sources, generating different types of data at different rates.

For example, a transport authority for a large city may create a system digital twin of its public transport infrastructure that provides a real-time virtual model of the flow of people throughout the city. The virtual model is driven by data generated from a wide variety of sources in real time:
- Vehicle movements from in-vehicle GPS, road-side sensors, CCTV analysis, routing requests, live dispatches of public transport
- State and operation of infrastructure such as traffic lights
- Movement of people, from mobile GPS, ticketing activity, CCTV.

The National Traffic Information Service, responsible for managing traffic on England's trunk road network, acquires data from about 1,000,000 vehicles travelling on the network, 1,000 number plate cameras and over 10,000 road-side monitoring units. Transport of London, responsible for the public transport system and the road network of London, operates over 9,000 buses and 900 trains, controls 6,300 traffic signals, manages traffic for vehicles travelling over 100,000,000 km per day, and over 5,000,000 public transport passenger movements per day.

System digital twins (virtual models of the system) integrate these data sources and provide real-time understanding of the state of traffic flow. Synchronous services may be added to the digital twin such as using anomaly detection methods to determine incidents (accidents, congestion etc.). However, there is also the need to manage these incidents, for example to divert traffic around accidents, deploy emergency services and/or reroute public transport. System digital twins may deliver and aid this if they have a predictive capability, to move the virtual state of the model forward in time (faster than real time, or at a constant offset from real time).

In other words, a requirement of smart transport systems and other complex systems is to predict the state of the system and so enable services such as detecting collisions, accurate trip time forecasts, establishing the impact of incidents on the system, indicating when public transport will arrive, selecting individual taxis etc. Each of these services is directly or indirectly based on the state of the modelled infrastructure/objects within the infrastructure, in terms primarily of positioning.

The same requirement is evident in other application areas, for example power networks.

The present invention is defined by the independent claims, to which reference should now be made. Specific embodiments are defined in the dependent claims.

An exploratory digital twin allows a system manager to formulate a response to a situation such as a problem (e.g. roadworks) in the modelled system, in the form of an action (such as a diversion), and check the effect of the action on the system.

Each digital twin (source, clone, and exploratory) in this sense is a system digital twin, and the individual models (nodes) are object digital twins.

Of course, the source digital twin may also execute, modelling the evolution of the system (to a first clone digital twin) over the time increment (in the absence of an action). Similarly, any further clone digital twin may also execute, modelling the evolution of the system (to further clone digital twins) over the further time increment (in the absence of an action).

The exploratory digital twin, cloned from the source digital twin (or from any clone digital twin), is modified to reflect the action taken on the physical object (or system). For example, to apply an action, methods may make a suitable change to the state (or value thereof) of the relevant object rather than (or in addition to) have it evolve in the usual fashion through a data stream synthesiser.

The additional data stream synthesizer emulates the input of data to the exploratory digital twin using the output of the same exploratory digital twin and provides time-incremented synthesized values (for example by incrementing a position using the output position and speed of a vehicle from the original state of the exploratory digital twin and determining the position at a selected time). Thus, instead of a real-life detected position, a synthesized position for a predetermined additional time increment, simulating how the effects of the action modify the state of the exploratory digital twin, is provided to the exploratory digital twin based on known data. The term "additional" here is to distinguish from the data stream synthesizer and the time increment involved in the main digital twin sequence.

This allows the exploratory digital twin (which, at least initially, has the same modelling as the source digital twin and any clone digital twin, and for example starts with the same state as the source digital twin) to then produce an evolved state (of itself), which is a future predicted state. Thus, the exploratory digital twin effectively drives itself at the additionally incremented time. One or more clone digital twins, cloned from a source digital twin, may be provided in a sequence (after the single source digital twin), as explained in more detail hereinafter, to extrapolate into the future. An exploratory digital twin, created from a digital twin, may therefore be created from a source digital twin or from a clone digital twin.

The exploratory digital twin may be driven in parallel with the digital twin (source or clone) from which it is created. That is, it may start with the same state and at the same (modelling) time as the twin from which it is created. In arrangements, the exploratory digital twin may be driven in parallel with the digital twin but at an increased speed, such that evolved states of objects of the exploratory digital twin may be calculated faster than in real-time, enabling the future effects of an action to be understood quickly and decisions concerning the network to be implemented at the earliest possible stage.

Preferably, time increments used for later digital twins in a sequence (that is, clone digital twins or exploratory digital twins that appear later in a digital twin sequence than source digital twins or earlier clone digital twins or earlier exploratory digital twins) have larger values, as simulation accuracy (relative to true events) at distant future times is less than that in the immediate future; in this way, unnecessary computational costs incurred by running at fine temporal resolution are reduced.

Models of objects in a source digital twin may be interconnected as object nodes in a directed acyclic graph, DAG, with interconnections representing flow of data.

Nodes in the simulation are not limited to nodes representing objects. Depending on the circumstances any suitable types of nodes may be added. Nodes in the source digital twin (and thus in the exploratory digital twin and any clone digital twins) may also include event nodes modelling events which affect the loT network, such as incidents which have an impact on the state of the objects.

In arrangements, the digital twin that is cloned to create the exploratory digital twin is a source digital twin: the virtual model of a physical object or system that reflects the current state of the physical system/object and is driven by events and sensor readings from the real world. In this way, the exploratory digital twin may investigate the effects on an action as taken on an initial state of the modelled physical object or system. In alternative arrangements, the digital twin that is cloned to create the exploratory digital twin is a clone digital twin: a virtual model of the physical object or system that reflects the state of the physical system/object at some time in the future and its state determined by driving one or more other digital twins (the source digital twin or another clone digital twin).

Additionally or alternatively, nodes in the source digital twin (and thus in the exploratory digital twin and any clone digital twin) may also include system information nodes modelling information about the loT network (such as a bus route).

The method may further comprise further comprising creating a service node (as part of the overall DAG) at the output of the source digital twin, the output of the exploratory digital twin, or the output of the any digital twin - or any combination thereof. The service node may, for example, produce a data service based on the state of an object in the loT network. More preferably, the output and the service are both based on the state of all the nodes in the network, whether in real time (at the output of the source digital twin) or in the future (at the output of any clone digital twin(s) or exploratory digital twin). Of course, the service may use the state of more than one object, or even other services and the predicted evolved state of objects in chains of clones.

Such "services" may be viewed as functions (in the mathematical sense) of the states. For example, the predicted position of a vehicle is a state, but the system may output warnings of collisions, which is a service/function which depends on the positions (part of the state) of all the vehicles.

In a preferred construction, the service node is provided in parallel with (at the same modelling time as) the data stream synthesizer at the digital twin and/or with the additional data stream synthesizer at the exploratory digital twin. In this arrangement, the method may further comprise feeding the output of the source digital twin to both the service node and the data stream synthesizer. The method may additionally or alternatively comprise feeding the output of the exploratory digital twin to both the service node and the additional data stream synthesizer. It will be appreciated that no data synthesizer is required at the output of the last clone digital twin in a sequence or at the output of the last iteration of any exploratory digital twin in a sequence.

In embodiments, multiple exploratory digital twins may be used, for example, to explore the effects of different actions taken on the physical object (or system) and/or the effects of the same actions taken on the physical object (or system) at a different time. In more detail, the method may further comprise creating a further (a second, a third, etc.) exploratory digital twin, which includes the same models and interconnections as the source digital twin. The method may further comprise connecting an input of the further exploratory digital twin with an output of any of: the source digital twin, and, if created, any clone digital twin. As with the (first) exploratory digital twin, this initialises the further exploratory digital twin. The method may further comprise modifying an aspect of the further exploratory digital twin to simulate an action taken on the further exploratory digital twin. The action taken on the further exploratory digital twin may be the same or may differ from the action taken on the (first) exploratory digital twin.

The method may further comprise connecting an output of the further exploratory digital twin with an input of the same further exploratory digital twin. To allow a time increment as before, this connection may be via another additional data stream synthesizer node, wherein the another additional data stream synthesizer node adds another additional time increment to the output of the further exploratory digital twin so that the further exploratory digital twin drives the further exploratory digital twin (i.e. drives itself) at the another additional incremented time. Note that the term "another additional" is used here to distinguish from the "additional" time increment and data stream synthesizer used for the (first) exploratory digital twin and also from the "further" time increment and data stream synthesizer for the further clone digital twins. The another additional time increment(s) and the additional time increment(s) may be of the same value or may be different.

The method may further comprise executing the further exploratory digital twin to provide an evolved state of one or more of the objects at the another additional incremented time as the output of the further exploratory digital twin. The method may further comprise comparing the output of the exploratory digital twin and the output of the further exploratory digital twin. As both actions are implemented at the same time (on the same state), the comparison enables the user to determine the effect of both actions and decide on the optimum action to be taken.

The time increment for the further exploratory digital twin (the further additional time increment) may be the same or may be different from the (first) additional time increment used for the (first) exploratory digital twin. If the same time increment is used, the method may compare the effects and outcomes of actions as taken at equivalent time intervals (after application of any action) in the future.

In embodiments where there are multiple exploratory digital twins, the input of any further exploratory digital twin(s) may be connected to the same input as that connected to the input of the (first) exploratory digital twin. The action taken (simulated) on the (first) exploratory digital twin may be a different action to the action taken on any further exploratory digital twin. In this way, the effects of different actions taken on the same physical object (or system) at the same time may be explored.

In embodiments where there are multiple exploratory digital twins and there is more than one digital twin in a digital twin sequence (for example, a source digital twin and a clone digital twin, or a source digital twin and many clone digital twins), it is possible to explore the effects of an action taken at different times. In more detail, the input of any further exploratory digital twin may be connected to a different output from the output connected with the input of the (first) exploratory digital twin (for example, the (first) exploratory digital twin may be connected to the source digital twin, and a further exploratory digital twin may be connected to a clone digital twin, itself connected to the source digital twin). The action taken (simulated) on the (first) exploratory digital twin may be the same action as the action taken on this further exploratory digital twin.

Of course, embodiments enable many exploratory digital twins to be created: some may explore the effects of the actions taken at different times while others may, simultaneously, explore the effects of different actions taken at the same time.

Input into the simulation is not limited to real-time sensor data or loT data. Preferably, context information from an external data source is additionally input into the source digital twin and/or into any exploratory digital twin and/or into any clone digital twin.

For any exploratory digital twin (first, second, further, etc.), embodiments may enable repeated processing of the initial state. That is, an exploratory digital twin may execute repeatedly (iteratively), with each repeated execution providing an evolved state at the (next) incremented time. By feeding the evolved state from the output of the exploratory digital twin back to the input of the exploratory digital twin, this process may be repeated indefinitely. In this way, methods may provide a plurality of evolved modified states of one or more of the objects at repeatedly incremented times as the output of the exploratory digital twin.

In embodiments, execution of any source digital twin or any clone digital twin may be in real-time (following or tracking real-time). That is, the system simulated by the source or clone digital twins may evolve in real-time, using, for example, sensor data acquired in real-time. For example, for a source digital twin, executing following real-time may involve acquisition of sensor data in real-time. Similarly, for clone digital twins, executing following real-time involves progressing to the next clone digital twin in a sequence at a rate that matches the rate that real-life objects (e.g. cars) move or matches any sensor data update. Any exploratory digital twin may be executed at a faster rate, such that any evolved states reflective of any effects of any actions are acquired quickly. In this way, decisions concerning implementing actions may be made quickly.

Creating an exploratory digital twin or a clone digital twin may not necessarily involve creating a complete duplicate of the underlying code (of, for example, the source digital twin). In embodiments, creating the digital twin may comprise using/ the same code as for the source digital twin (so that only one code copy is required for the whole sequence). The state of the twin is input into the code (at the twin's current time) and the code is executed in one or more iterations. The method may further comprise replacing a current state of the digital twin or the exploratory digital twin with the resultant state after execution. In this way, for example, a state from a plurality of states, one corresponding to each digital twin (the plurality of states stored in a database, for example) may be selected for loading into a "shell" of code that is common to all digital twins and that is connected to the data stream synthesiser. For instance, each state may be stored as a set of values, which may be loaded when required. This method of creating a digital twin avoids the computational processing burden of duplicating a large system (both the code and the relevant data).

Turning to a preferred specific application, the loT network may be a traffic network. Here, the object nodes may include vehicle nodes and/or one or more infrastructure nodes. One or more event nodes are included, such as a traffic incident node.

The state of one or more of the objects may include one or more of: position of the object and speed of the object.

In one scenario, the traffic network is a public transport network, and the nodes in the source digital twin, exploratory digital twin(s), and any clone digital twin(s) include vehicle nodes, incident nodes representing events that may have an effect on the public transport network, stop nodes representing a section of the public transport network infrastructure, and system information nodes representing the path of the vehicle. In this case, the order of the DAG may be Incident, Stop, Run and then Bus nodes (with the nodes of each type being in parallel in each digital twin of the system).

According to an example, useful for understanding the invention, there is provided a method of predicting evolution of simulation results for an Internet of Things, loT, network, comprising: creating a source digital twin for the loT network, driven by real-time sensed data from objects fed to models of the objects which are interconnected as object nodes in a directed acyclic graph, DAG, with interconnections representing flow of data, the source digital twin outputting a state of one or more of the objects in real time; creating an exploratory digital twin, which includes the same models and interconnections as the source digital twin; connecting an input of the exploratory digital twin with an output of the source digital twin so that the source digital twin initialises the exploratory digital twin; modifying an aspect of the exploratory digital twin to simulate an action taken on the exploratory digital twin; connecting an input of the exploratory digital twin with an output of the exploratory digital twin via a data stream synthesizer node, wherein the data stream synthesizer node adds a time increment to the output of the exploratory digital twin so that the exploratory digital twin drives the exploratory digital twin at the incremented time; and executing the source digital twin and the exploratory digital twin to provide an evolved modified state of one or more of the objects at the incremented time as the output of the exploratory digital twin.

According to an embodiment of a further aspect of the invention, there is provided a computer program comprising instructions which, when the program is executed by a computer, cause the computer to carry out any of the methods as described above. The program may execute locally or on the cloud or both to provide the computer-implemented method at a local device. For example, the digital twins may be built and executed at a server (on the cloud) and the outputs may be provided to a local device to give a specific service.

According to an embodiment of a further aspect of the invention, there is provided a computer (data processing apparatus) comprising a processor, a network interface and a memory comprising instructions which when executed cause the computer to carry out the method of any of the claims. The processor and memory may be linked to a display (for example displaying the digital twin sequence (including any exploratory digital twins) or services or results) and/or to an input device (for a developer to build to input data and parameters to build the models, or for the end user to interact with the service).

A corresponding computer system may comprise the computer as defined above, a display, and an input device and any other required components.

An apparatus (computer or computer system) or computer program according to preferred embodiments of the present invention may comprise any combination of the method aspects as claimed. Methods or computer programs according to further embodiments may be described as computer-implemented in that they require processing and memory capability.

The apparatus according to preferred embodiments may be described as configured or arranged to, or simply "to" carry out certain functions. This configuration or arrangement could be by use of hardware or middleware or any other suitable system. In preferred embodiments, the configuration or arrangement is by software.

The invention may be implemented in digital electronic circuitry, or in computer hardware, firmware, software, or in combinations of them. The invention may be implemented as a computer program or computer program product, i.e., a computer program with instructions tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results. Multiple test script versions may be edited and invoked as a unit without using object-oriented programming technology; for example, the elements of a script object may be organized in a structured database or a file system, and the operations described as being performed by the script object may be performed by a test control program.

Elements of the invention may be described using the terms "processor", "input device", etc. The skilled person will appreciate that such functional terms and their equivalents may refer to parts of the system that are spatially separate but combine to serve the function defined. Equally, the same physical parts of the system may provide two or more of the functions defined.

For example, any separately defined means may be implemented using the same memory and/or processor as appropriate.

### Brief Description of the Drawings

Preferred features of the present invention will now be described, purely by way of example, with references to the accompanying drawings, in which: -
Figure 1 is a schematic representation of a simple processing DAG;
Figure 2 is a schematic representation of a simple processing DAG with data flow for predictive capability;
Figure 3 is a schematic representation of a source digital twin and two clone digital twins;
Figure 4 is a schematic representation of a source digital twin and seven clone digital twins;
Figure 5 is a schematic representation of a digital twin sequence;
Figure 6 is a schematic representation of cloning a digital twin;
Figure 7 is a flow diagram illustrating a method of predicting evolution of simulation results for an loT network;
Figure 8 is a schematic representation of an exploratory digital twin, branching from a source digital twin, according to embodiments;
Figure 9 is a schematic representation of an exploratory digital twin, branching from a clone digital twin, according to embodiments;
Figure 10 is a schematic representation of plural exploratory digital twins, branching from a digital twin sequence, according to embodiments;
Figure 11 is a schematic representation of an exploratory digital twin, according to embodiments;
Figure 12 is a schematic representation of the lifecycle of an exploratory digital twin;
Figure 13 is a schematic representation of cloning a digital twin using twin model code and states;
Figure 14 is a second schematic representation of cloning a digital twin using twin model code and states;
Figure 15 is a diagram of a public transport example;
Figure 16 is a diagram of a public transport example with connected digital twins;
Figure 17 is a diagram of suitable hardware for implementation of invention embodiments.

### Detailed Description

Processing of streaming data at scale and delivering insights in real time is used in many web-scale applications such as processing click streams to deliver advertisements, in online fraud detection and in video media consumption. There are also applications in smart transport by, for example, ride hailing services where location data are used to deliver arrival estimates, pricing, driver allocation and ride monitoring. The latter applications commonly require merging of more than one data stream, for example to match a passenger with a driver and vehicle. However, the design of stream data processing systems makes this difficult. Complex processing may only be applied at the level of a single data stream and merging different data streams requires a lot of effort. This is a particular problem if the processing depends on the history of an object, as there is no mechanism in the prior art to retain the correlated history of multiple data streams. This limits the number and the sophistication of the services that may be built on the real-time data stream. As a result, real-time services are often simplistic, with more complex processing performed off-line.

One useful concept used to develop more sophisticated services is the digital twin, introduced above, where actual entities in the real world, such as vehicles, are replicated in the digital realm with their behaviour modelled in code but driven by values from the incoming stream of sensor data. One advantage of digital twins is that they separate the services from operating directly on the data stream; services may operate on the state and output of the digital twins.

When modelling complex systems, designers distinguish between the digital twin of the whole system (System digital twin, e.g. smart cities) and digital twins of the components (Object digital twins, e.g. vehicles, passengers, traffic lights). Object digital twins automatically handle the gathering of all the data streams that relate to their real world counterpart (for example, vehicle telemetry and location data from the current occupants), may store all relevant history (states), and perform complex processing to model the behaviour or state of the object, which is then the output.

Such digital twins may be built on large scale, high volume streaming data using platforms such as Fujitsu's Stream Data Utiliser (aka Dracena: https://www.fujitsu.com/global/about/resources/news/press-releases/2019/1008-01.html), Flink's Stateful Functions (https://flink.apache.org/stateful-functions.html) or Azure's Durable Functions (https://docs.microsoft.com/en-us/azure/azure-functions/durable/durable-functions-overview?tabs=csharp).

Platforms that process streaming data achieve high performance partly by restricting the types of computation that may be performed with a common constraint requiring that the processing be structured as a Directed Acyclic Graph (DAG). A processing graph consists of nodes (which correspond to Object digital twins or services using their output), where computation occurs, and edges that connect the nodes and represent the flow of data or events. If a graph is a DAG, then the events always flow in a forward direction. Hence there are no cycles that allow the reprocessing of data already processed by a node. In otherwords, the nodes may be grouped into sets forming stages and there may be no communication from one stage to a previous stage or "backwards"/"sideways" between nodes in a stage.

Some platforms, such as Flink's Stateful Functions, may allow such cycles in processing, but at a significant penalty in performance.

There are techniques to overcome these limitations, such as introducing nodes that aggregate events or by splitting the digital twin over several stages.

Digital twins implemented using these technologies are able to provide services based on the current or recent past states but have difficulties when asked to deliver services that require predictions of the evolution of the states into the future. In the prior art, time dependency would be incorporated into a system digital twin by modifying the behavioural equations of each individual object twin. The time dependency of the interaction between the object twins would then require messages to be passed between object twins (nodes) that share the same computational stage. As discussed above, with streaming platforms requiring computations constructed as a DAG, this becomes impossible.

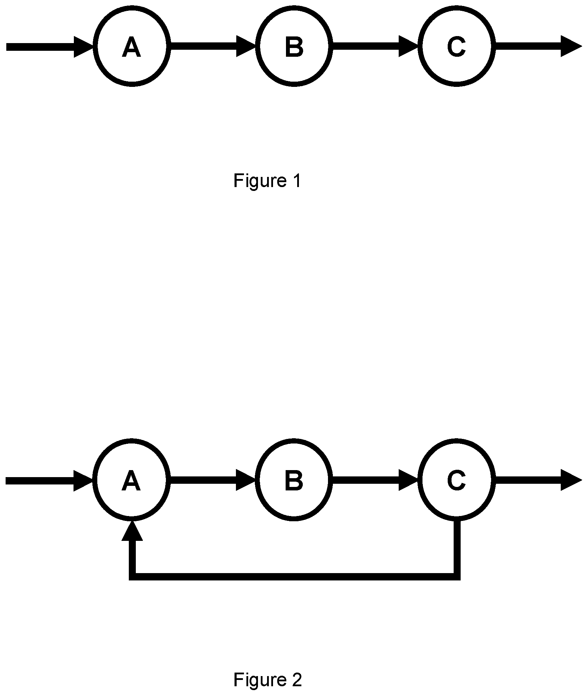

Figure 1 shows a very simple processing DAG. The lettered circles (A, B, C) are processing nodes, the connecting edges represent the flow of data (arrows indicate direction). This DAG could be used to predict travel times along a section of road in which case Node A would be an Object digital twin of a vehicle, and Node B an Object digital twin of a section of road. Node C provides a travel time estimation service. In practice there would be many instances of type Node A and Node B and a few instances of Node C, but the flow of data would be strictly left to right. Nodes A feed vehicles' position(s) and route(s) to Nodes B, which accumulate the data to compute the traffic density on their segment. Nodes C use the traffic density to compute travel times.

The configuration in Figure 1 provides a view of the current travel times but does not provide a view of the future state of the roads. An estimate of where the vehicles will be at the future time depends on the travel time over the road segments, which is calculated at Node C. Figure 2 shows the data flow that is required to achieve this. The movement of data from Node C to Node A means that the graph is no longer a DAG and cannot be processed (or cannot be processed efficiently) using current stream data processing systems.

### Pipelined Digital Twins

Methods allow the estimation of the future state of a system modelled by a digital twin by replicating the digital twin to create a clone digital twin which has the same mathematical modelling as in the original (or source) digital twin, but different inputs and thus different outputs. Hence the modelling is the same, but the state of the twin will be different (due to the ML learning and/or difference in time)

As used herein, a source digital twin (sDT) is the virtual model of a physical object or system (for example, a System digital twin such as of a smart city, transport network, power network etc.) that reflects the current state of the physical system/object and is driven by events and sensor readings from the real world.

As used herein, a clone digital twin (cDT) is a virtual model of a physical object or system that reflects the state of the physical system at some time in the future with possibly some actions performed on it. cDTs are driven by the output of one or more other digital twins in the collection.

As used herein, the term "driven" defines the main source of data that is used to set the state, and so the modelled behaviour, of a digital twin. In conventional digital twins this is the real world, but in this methodology digital twins may be driven by the output of other digital twins.

As used herein, a digital twin Collection is a set of one or more digital twins (usually System digital twins).

As used herein, a Physical System or Object is some part of the real world that is modelled by a digital twin as described in this document.

As used herein, a digital twin sequence (DTS) is an ordered collection of System digital twins offset from each other by some time interval (not necessarily constant) and intended to model the evolution of the Physical System into the future. The sequence starts with an sDT and is followed by a number of cDTs, each cDT is driven by the previous digital twin in the sequence. DTSs execute at real time so digital twins in the sequence always reflect the state of the Physical System at the same offset from current time.

As will be explained hereinafter in more detail, executing these clones concurrently with the original digital twin but with their system time (modelled time) advanced by short increments allows estimation of a future state. A series of clones may run concurrently, advancing time by increments until the desired prediction offset is reached, or a single clone may be provided.

As used herein, an exploratory digital twin (eDT) is a cDT used to explore the effect of an action on the physical object or system. The eDT may be initialised by cloning the state of a digital twin (either source or clone) on the main (Pipelined) DTS with the required modifications to reflect the action. The state of an eDT at a time may be used to drive the eDT to the next time. That is, an eDT is driven by output of itself at the previous time in the simulation time sequence.

Further, as used herein, a Pipelined DTS is a DTS in the absence of any eDT. This may also be referred to as the "main DTS". In this way, one may think of an eDT as an exploratory "branch" stemming from the Pipelined DTS.

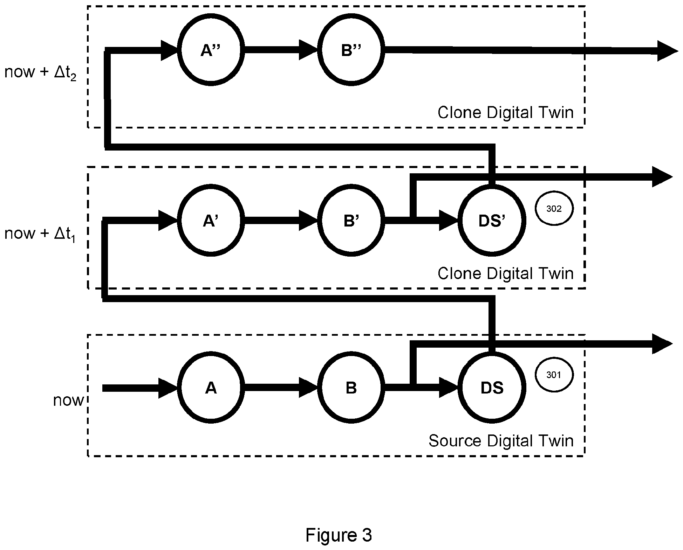

Figure 3 is a schematic diagram of nodes and data flow which shows the new flow of data and structure of computation. It should be observed that the data flow is strictly unidirectional (left to right) through the graph, maintaining it as a DAG. The System source digital twin (with Object twins A and B) is shown in the lowest layer. The future states of the system are shown as the higher layers, each of these also maintain a DAG. These future states are provided by clone digital twins cDTs at time now+Δt₁ (with Object twins A' and B') and now+Δt₂ (with Object twins A" and B") in this diagram, where Δtₙ is the offset from real time - now - of the cDT. Here, now+Δt₂ may be viewed as the first clone time plus further time increment. All the digital twins export the same data/services as previously (data exiting to the right). Of course, more clone digital twins may be provided, or a single clone digital twin may be provided.

Figure 3 introduces a new type of processing node, a "Data Stream Synthesiser" - labelled DS (301, 302), which effectively provides a modified "synthetic" data stream for the following cDT and is responsible for advancing the simulation time. The Data Stream Synthesiser takes the state of all of the Object twins in the System twin (sDT or cDT) and models the time evolution of each twin to advance simulation time to the time of the following clone. For example, the data stream synthesizer will use speed and position data of a vehicle to advance the position of the vehicle to an estimated position at the incremented time. Other examples are: using traffic signal sequencing to determine the light setting of a traffic signal at the incremented time; using a number of embarkations/disembarkations of passengers to determine if a bus will have left a stop at the incremented time; or using downstream traffic density and flow to calculate the density of traffic upstream at the incremented time. Any or all of these examples and other suitable algorithms may be used in combination, depending on the data available, the accuracy required and the computing power available. In a power generation and distribution scenario, one example of time evolution modelling is using weather forecast (context) data to set the amount of power being generated at the incremented time.

The Data Stream Synthesiser uses its time-advanced state to produce predictions of the data that the real-world sensors would produce at the simulation time of the next clone.

Using this construction, the input of future clones may be derived from the output of the previous clone in the sequence. The "now" digital twin is driven by external events and data (entering from the left), but the future clone digital twins (at time now+Δt₁ and now+Δt₂) are driven by the synthesised results of the previous digital twin ("now" drives now+Δt₁, now+Δt₁ drives now+Δt₂ etc.).

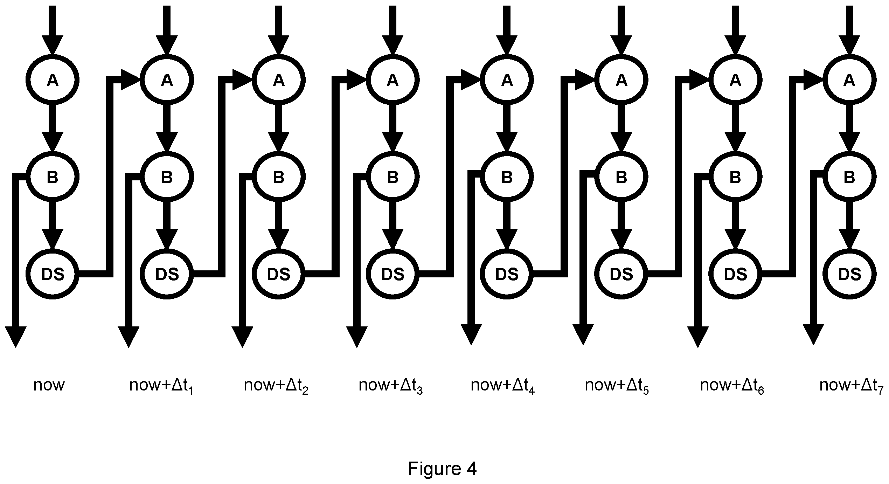

The services are not shown here (or in Figure 4), but may be a Node B, so that there is a single Object digital twin, or may be provided as an extra node for each digital twin (or any digital twin that provides the service), for example in series before the data stream synthesizer or in parallel with the data stream synthesizer.

Cloning digital twins may increase the computational load and resource consumption in direct proportion to the number of clones (see below for more strategies to mitigate this possible effect). Note that each clone is responsible for its range of time, maintaining a constant offset from the base simulation, which is set by the data stream synthesizer. As real time progresses, the sDT follows and the cDTs maintain their offset (e.g. Δt₁ and Δt₂ in Figure 3). However, as this is simulation of the evolution of a real system, the further into the future, the lower the accuracy of the clones as simulation errors propagate to the next stage, from modelling inaccuracies and lack of current values for some data. Furthermore, the further forward in time predicted, the longer the timescale that values are required for. For both these reasons the range of time that each clone is responsible for will not necessarily be constant and may increase the further ahead of time modelled. See Figure 4 for an illustration of this. In Figure 4, each digital twin is shown comprising exemplary nodes A and B and followed by a data stream synthesizer DS. The first digital twin to the left of the figure is a source digital twin, whereas the other digital twins are clones, and Δt may increase from Δt₁ to Δt₇.

As the current time progresses the "now" source digital twin uses incoming data to keep up to date with the current time. The output from "now" driving "now+Δt₁" and "now+Δt₂" via the data stream synthesizers means that these clones maintain their offset from the current time. In this way, services that rely on simple evolution of the current state (e.g. routing based on traffic conditions one hour into a journey) may be delivered.

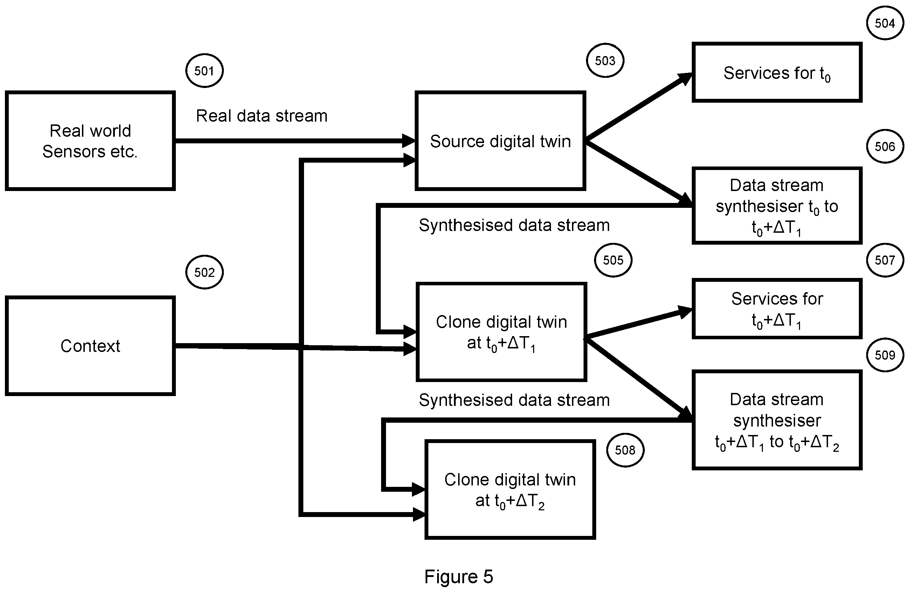

Figure 5 is a schematic diagram in which representation of the individual nodes (object digital twins) in each system digital twin have been replaced with a single block representing the system digital twin. It shows the major processes in an implementation of a DTS.

A digital twin system as known from the prior art, which maintains an evolving mirror of the state of a Physical System is formed from items 501, 502, 503 and 504. Real world sensors 501 and/or other real-world data sources provide a real data stream which is fed to a source digital twin sDT (of the system) 503. The output of the source digital twin (sDT) is passed to both services 504 and a data stream synthesizer 506. The sDT 503 modelling the Physical System is not only driven by a real-time data stream 501 but, possibly also by a stream of further data 502 providing information about the context of the Physical System (for example, weather conditions, events, time of year etc.), which may be real time or from, for example, database queries. The system delivers services 504 (such as simple routing services) to clients using data from the sDT. The next component of the DTS is formed by cloning the sDT 503 to form the first cDT 505, which is driven by a synthesised data stream created from the data stream synthesizer 506 and possibly from context information (offset by ΔT₁, for example by consulting a later weather forecast or data applicable to the incremented time, if there is a change in the context data overtime). This cDT provides services 507 for clients derived from data that estimate the state of the Physical System at t₀+ΔT₁. The DTS is extended further into the future by cloning the first cDT to form a cDT 508 at t₀+ΔT₂ (which is driven by a synthesised data stream 509 and possibly context data offset by ΔT₂). Thus, the second cDT 508 has a state which is the same as the first clone and is then adjusted for ΔT₂.

Clones may be constructed in one of two ways:
- Through full replication. Each clone operates as an independent entity maintaining copies of its dynamic and static states. This has the advantage of simplicity in coding and allows for changes to the configuration during time (for example, addition and/or deletion of processing nodes representing individual objects)
- Clones may be created as additional processing/services within the base digital twin. This has additional coding complexity as incoming data must be handled by the correct time-advanced instance and dynamic state must be isolated. This technique does have the potential to be more resource efficient since static state may be shared amongst all the instances (clones). See below for a further discussion of this method of cloning.

Most streaming systems have a mechanism for retaining non-volatile state - in case of computer failure or, for some platforms, to facilitate upgrades. State restoration is designed to be efficient. Cloning to create a new sequence may be started by copying the saved state of the sDT to initialise the first cDT. The output from this may be used to initialise the next clone in the time sequence and so on.

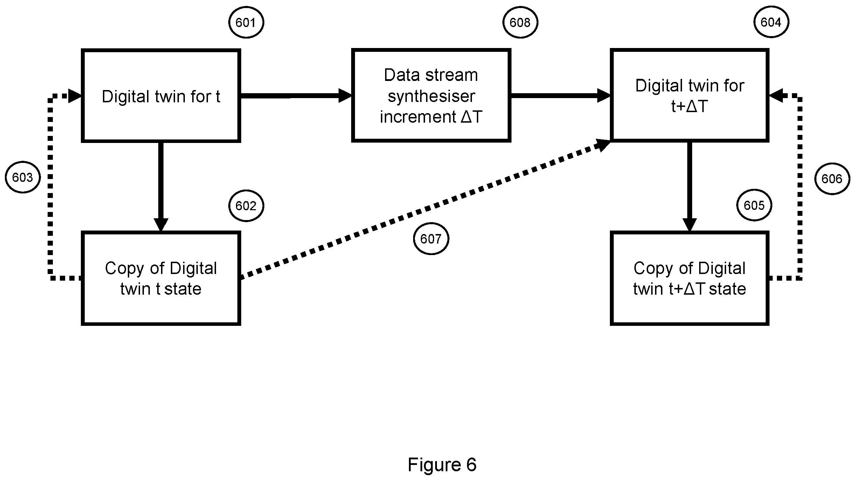

Figure 6 illustrates this process. 601 is a digital twin as part of the DTS. As part of good administrative practise, the continuous execution of the computer program executing the digital twin is ensured by taking regular copies of the state of the program and saving them on some form of non-volatile storage. In the case of systems such as Dracena the program state consists of all of the state values of every object in the digital twin *and* the computer code that is being used to model the system (602). In the case of a failure, the execution of the digital twin may be resumed by restoring the saved state to the execution hardware (603). The same mechanism is available to every digital twin in the sequences (604, 605, 606).

To extend a DTS by ΔT, execution capability (hardware and supporting software e.g. Flink) is allocated for the new clone. Execution of the new clone is started by restoring the saved copy of the state at t to the newly allocated hardware and software (607) which initialises both the computation and the object states of the digital twin at t+ΔT (604) to that of 603, i.e. at time t. In parallel to the initialisation of 604, a new Data Stream Synthesiser (608) is created and attached to the output of 603. This allows the data stream to move the clone at 604 from time t to time t+ΔT as required.

Note that the program state save and restore mechanism is possible using a variety of technologies.

### Exploratory Digital Twins

Pipelined digital twins, as introduced above and which form the subject of related European patent application publication number EP3985925 A1, follow the expected path of the development of their Physical System. Often intervention is required to ensure that the best possible development path is followed and, before an action is implemented, the consequences of the action need to be evaluated. The enhancement to Pipelined digital twins described herein makes this possible by creating Exploratory Digital Twins (eDTs) from a Pipeline. An eDT simulates the state of the Physical System that differs from the Pipelined digital twin sequence by the results of an action and may evolve much faster than real time.

An advantage of the Pipelined digital twin technique, as discussed above, is that it may be easily adapted to offer a new type of service. The active management of transport systems requires responses to abnormal incidents (such as traffic accidents) where the operators need to formulate a response that has the best (or least harmful) impact on the wider system. The digital twin of the system will evolve to predict the effects of the incident but the inventors have realised that it would be advantageous if one could also predict the impact of one, or more, actions that may be taken in response to the incident (rerouting traffic, closing roads, rephasing traffic signals, etc.).

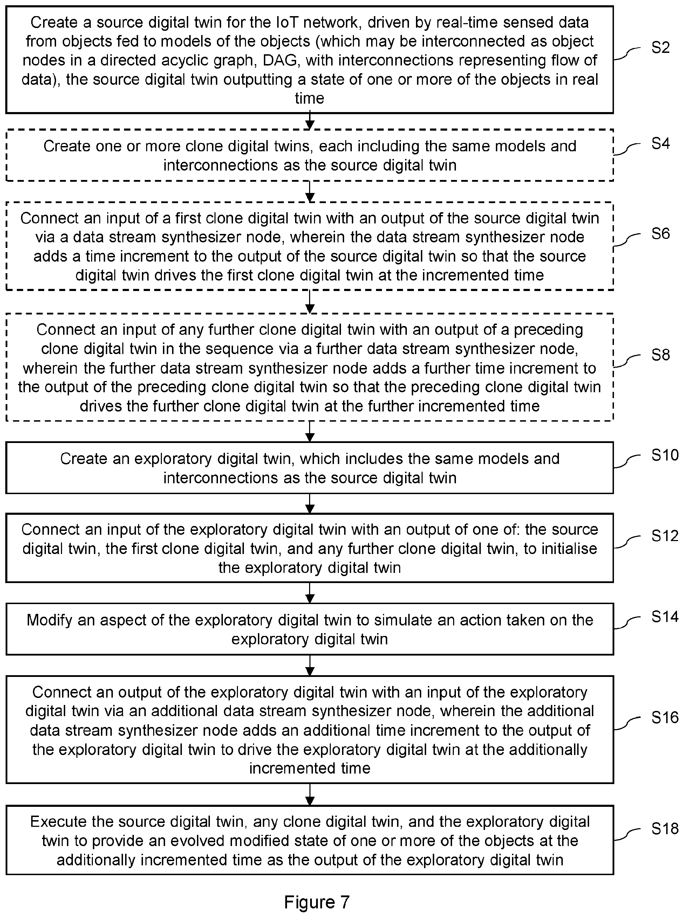

Figure 7 is a flow diagram of a method of predicting evolution of simulation results for an Internet of Things, loT, network according to a general embodiment. Step S2 creates a source digital twin for the loT network. The source digital twin is driven by real-time sensed data from objects fed to models of the objects, which are interconnected as object nodes in a DAG. In the DAG, interconnections represent the flow of data. The source digital twin outputs the state of one or more of the objects in real time.

For cases where eDTs "branch" from cDTs rather than from the sDT, a main DTS (or, equivalently, a Pipelined DTS) is formed before creating the eDT. Step S4 creates one or more cDTs from the sDT (or from previous cDTs). Each cDT includes the same models and interconnections as the sDT. Step S6 connects the input of a first cDT with an output of the sDT. This connection is via a data stream synthesizer node, which adds a time increment to the output of the sDT. In this way, the sDT drives the first cDT in the DTS at an incremented time in the future. Where there is more than one cDT in the DTS, Step S8 connects an input of any further cDT with an output of the immediately preceding cDT in the sequence. This connection is via a further data stream synthesizer node (that is, a separate data stream synthesizer to the data stream synthesizer from S6), which adds a further time increment to the output of the preceding cDT. In this way, the preceding cDT drives the further cDT at the further incremented time, thereby "evolving" the DTS.

Step S10 creates an eDT. The eDT includes the same models and interconnections as the sDT (and, therefore, any cDT).

Step S12 connects the input of the eDT to the output of the digital twin holding the state upon which the potential effect of an action is desired to be investigated. That is, the input of the eDT is connected to the output of the sDT or, if present, any cDT. In this way, the eDT is initialised.

S14 modifies or more aspects of the eDT in order to simulate an action as taken on one of more states of one or more of the objects of the digital twin from which the eDT is created.

S16 connects the output of the eDT to the input of the eDT. This connection loop is via an additional data stream synthesizer node (that is, additional to the data stream synthesizer used in S6), which adds an additional time increment to the output (and also the corresponding input) of the eDT. In this way, the eDT drives itself at the additionally incremented time.

S18 executes the digital twins. The sDT and, if created, any cDT executes. The eDT executes, outputting evolved modified states of one or more of the objects at the additionally incremented time. Of course, executing the sDT models the evolution of the system over the time increment (in the absence of an action).

It is advantageous to know the impact of actions as quickly as possible. For example, it is advantageous to know that closing a road will have the required impact 30 minutes into the future. Therefore, rather than execute a cDT at a constant offset to actual time (as may be performed with a Pipelined DTS), exploratory simulations may execute faster than real time (with each eDT clone maintaining a constant simulated time offset to its base sDT or cDT). This also means that there is no need to maintain more than one instance of an eDT for a particular action.

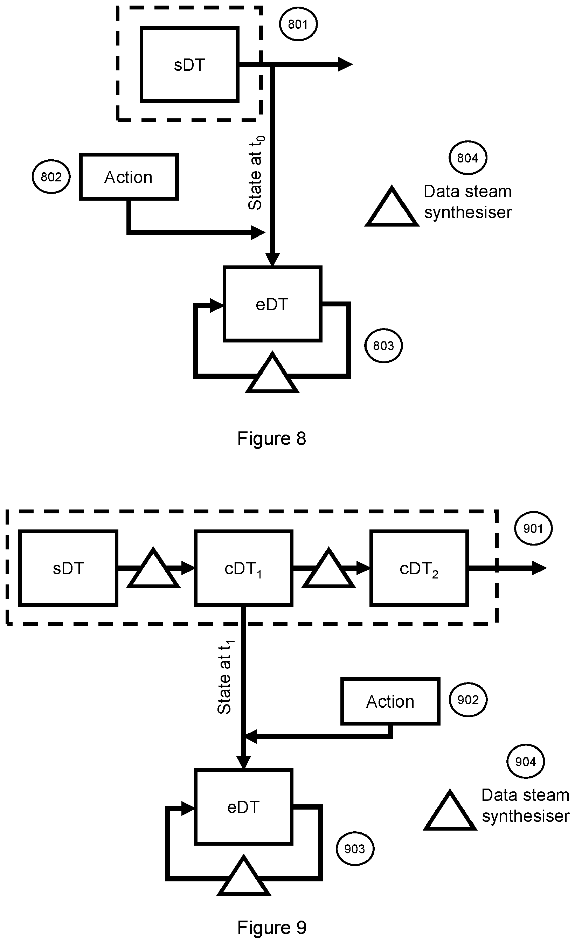

Figure 8 shows an example eDT, cloned from the sDT. The sDT may be a digital twin at the start of a Pipelined DTS 801 (note that cDTs, interconnections, and data stream synthesisers of such a Pipelined DTS are not illustrated here). The sDT state is cloned, such that the eDT that results from the cloning process includes the same models and interconnections as the sDT at an initial time (t₀) before the addition of any time increment. In this way, an eDT may be said to need a starting state, which may be an sDT.

An action 802 is applied to cloned sDT in order to simulate and explore the effects of the action. For example, application of an action 802 may be realised by modifying the underlying nodes and/or interconnections of the cloned sDT at time t₀, or by modifying the state values of one or more objects in the cloned sDT. The resultant digital twin (following cloning and application of an action) is eDT 803. For example, in the context of a traffic system, an action 802 could be to reroute a bus around a roadblock. Normally the data stream synthesiser would move the bus along its scheduled route. To apply the "reroute action", the bus's route may be updated directly in the eDT (only) with the diversion.

eDT 803 may be driven by context data (not illustrated) and a data steam synthesiser 804, which creates a synthesised data steam using the output of the eDT. The output of the data steam synthesiser 804 (stepped forward in time) is input back into the eDT 803. In this way, the eDT 803 may evolve and the effects of the action on the state of the sDT may be explored. The data from the physical world, which include the effects of the action, will drive the eDT model of the actual system and its evolution.

Note that the Pipelined DTS may continue executing as normal (in parallel) while an eDT executes. The eDT that is executing simulations in response to actions may use different time offsets to that used in a Pipelined DTS.

Figure 9 shows another example eDT. This eDT is cloned from a (first) cDT within Pipelined DTS 901. cDT, is cloned, such that the eDT that results from the cloning process includes the same models and interconnections as cDT, at time t₁. An action 902 is applied to cloned cDT, and the resultant digital twin (following cloning and application of an action) is eDT 903, which is driven by data stream synthesiser 904.

Of course, this illustrated example is similar to that illustrated in Figure 8 and described above, differing in that the eDT is cloned from a cDT rather than from an sDT. As above, an eDT may be said to need a starting state, which - in this case - may be a cDT for the time at which an action will be applied. That is, if an action is to be implemented in 10 minutes time, methods start the eDT from the cDT that is executing at a time nearest to 10 minutes time in the future.

In the present illustrated example, a comparison may be made of how the state of the Pipelined DTS evolves at a later time in the absence of any action taken (e.g. using cDT₂) and how the same Pipelined DTS may evolve if an action were to be taken (using eDT 903).

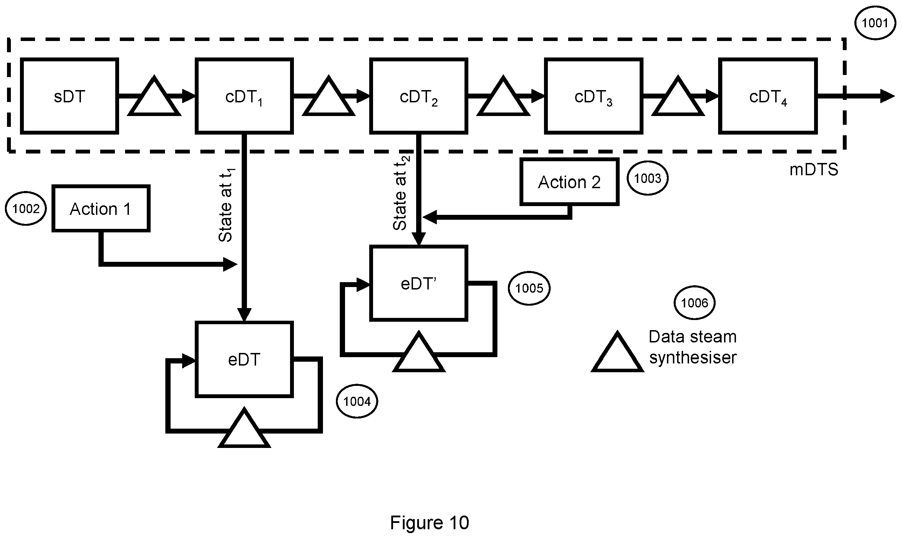

The effect of multiple actions may be explored concurrently by creating multiple eDTs initialised with different action data and/or at different times. For example, Figure 10 shows how multiple eDTs may extend a Pipelined DTS (main DTS, "mDTS"). The Pipelined DTS 1001 continues executing as normal, maintaining many cDTs concurrently so that they may provide the required updating services. The impact of actions 1002, 1003 may be explored by creating new clones from the DTS at the time that it is intended to apply the actions (for example, the time at which knowledge of the effect of an action is desired). In this example, this results in two independently executing clones (eDT and eDT'; 1004, 1005).

Note the differences between the source of the driving event stream between the Pipelined DTS 1001 and eDTs 1004, 1005. In the former case, it is a different cDT instance; for an eDT, it is the same eDT.

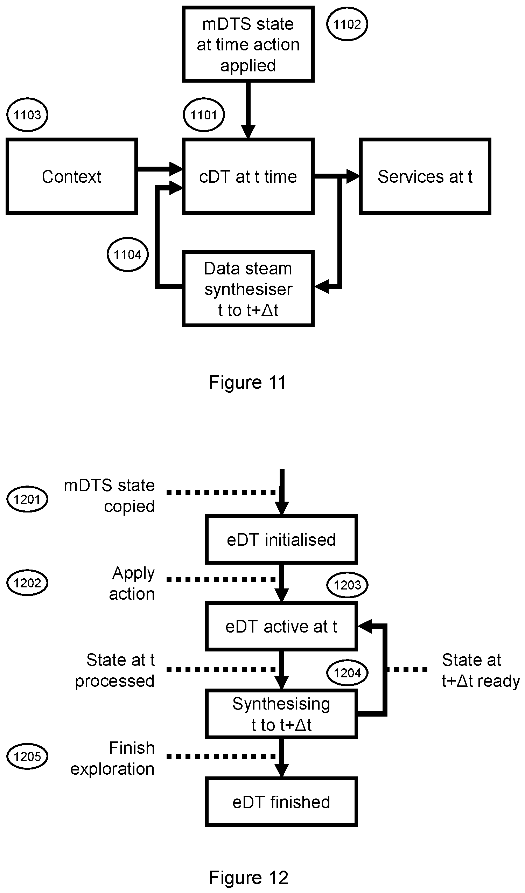

Figure 11 shows an example eDT. An eDT may comprise a single cDT 1101, initialised (cloned) from the state of the Pipelined DTS at the time of the action 1102. The eDT may be driven, as for Pipelined digital twins, by context data 1103 and a synthesised data stream 1104. The synthesised data stream may be created by the previous iteration of the cDT/eDT; this is in contrast to a Pipelined DTS, in which the synthesised data steam may be created by an independently executing/executed cDT (or sDT; see Figure 3, for example).

Figure 12 illustrates the "lifecycle" of an eDT within a DTS, which differs from cDTs within a (solely) Pipelined DTS. The eDT may be created and initialised by taking a copy of the state of (a cDT or sDT from) the DTS (1201). Execution of the eDT may start by modifying the copy of the state to reflect the impact of the proposed action (1202).

The eDT may then enter a cycle state, where the rate is driven by the speed of processing. For example, the eDT may cycle through the evolution of the state at a speed much faster than real life evolution of the simulated system, limited only by the capabilities of the processing power available. This may be in contrast to a Pipelined DTS, whose execution rate is typically in step with real time. This cycle comprises two types of processing: analysis services at a time t (1203); and synthesising services at time t to t+Δt (1204). For instance, analysis services may be services derived from the Digital Twin state and delivered to users (as opposed to the synthesis services, which move forward a time step). The exact service provided by the analysis service(s) depends on the application, but, as an example, analysis services may evaluate the service quality (are the buses on time, what is the is level of occupancy, etc.) or detect problems (a bus is off route). These analysis services deliver business value and are the reason for running the system.

Once the consequences of the action have been analysed, the execution of the eDT is terminated (1205). Termination may occur, for example, when the system operator decides that the simulation has run far enough forward to evaluate the effects of the action. This depends on the situation in question. That is, the eDT may be stopped by an external action - the operator terminating it.

An eDT moves forward in time, from say a time labelled "t" to a time labelled "t+Δt" by using the state of the eDT at "t" to drive a data stream synthesiser whose output is delivered back to the eDT on the same stream as a steam on which real sensor data would arrive (the sDT input is a data stream generated by real sensors; cDTs' and eDTs' input comes from computations that are presented to them as synthesised data looking like they come from real sensors). For the duration of the eDT's existence, there is only one copy of the eDT's state (contrast this with a cDT or sDT from a Pipelined DTS, where a number of copies of the state may exist concurrently). eDTs also have (or may be expressed with) a single copy of a model (computer code) and occupy a single instance of computing resources, which simplifies the complexity of maintaining the Digital Twin (single instance) and may also reduce its resource consumption and cost.

Multiple eDTs may execute during the lifetime of a DTS. eDTs execute concurrently with their respective/associated DTS and multiple eDTs may execute concurrently. Each eDT instance incurs an overhead when started up, which has an impact on the computational cost of execution and on the response speed (since initialisation may require some processing time). The overhead includes acquiring and allocating the computing resources and the network time to copy the initial state from the DTS to the new eDT instance.

### Cloning for cDTs and eDTs

As discussed above, clones (of DTs) may be created as additional processing/services within the base digital twin.

Note that the computer code to model the Physical System (Twin Model Code or TMC) may be the same for all cDTs, including those on the Pipelined DTS and those created for eDTs. The difference between these two instances (cDTs and eDTs) is the state on which the code operates. The naive way of implementing a DTS is to execute each DT on different resources (computers), which has the disadvantage of cost and the time taken to copy the state across computers (as well as the overhead to acquire and allocate the resources). To reduce the impact of initialisation overheads, one may execute a single instance of the model computer code and switch between different states according to, for example, an identification tag in the incoming synthesised data stream. The identification tag may indicate the time of the incoming data and to which digital twin it applies (for example, to an sDT or a cDT on the Pipelined DTS or to an eDT). This approach overcomes the cost and time disadvantages of naive cloning methods by executing the whole sequence on a single resource (or set of resources). This works because the computer code may be the same for all the DTs in the sequence.

At a low level, switching between states is just an address into computer memory, which is where the efficiency comes from. As a higher level example, consider the number of people on a bus: say for the sDT, the number of people may be 25, stored at location A; and for the first cDT consider that some passengers have got off and the number of people is 20, stored at location B. A service that evaluates the load may reference location A to deliver the value for the sDT time and may reference location B to deliver the value for the time of the cDT - but the computer code remains the same.

The data synthesisers will usually be stateless. That is, the data synthesisers may operate purely on their input data and do not need to reference data stored elsewhere to be kept between the times they are executed.

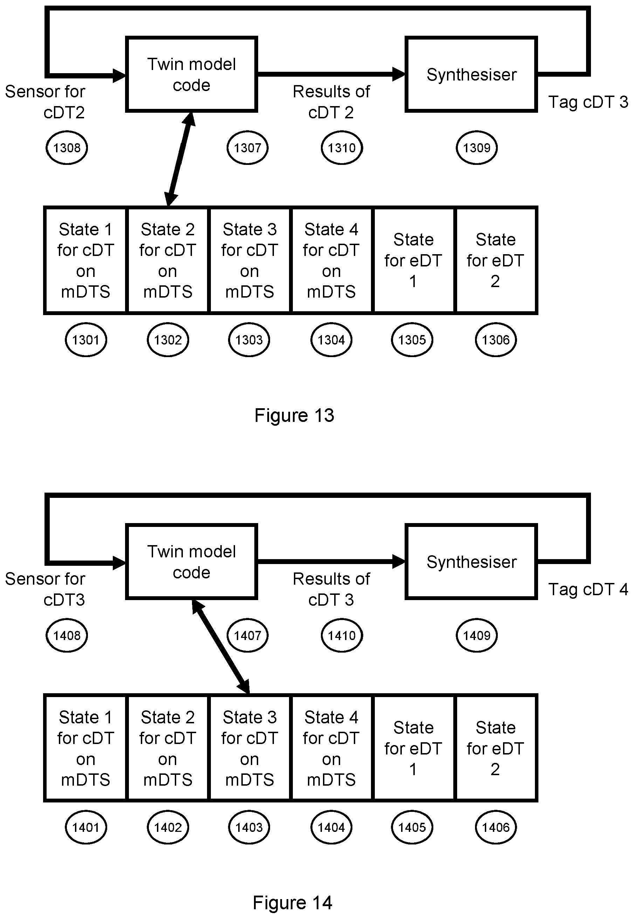

Figure 13 illustrates an example of this process of cloning and reducing the impact of initialisation overheads. In this example, there are a number of different versions of the modelled states (1301 to 1306), including four states for cDTs on the DTS (1301 to 1304) and two states for eDTs (1305 and 1306). eDT states in the collection (database) of states may be copied from the DT used to initialise the eDT and changed by any applied action. For sDT and cDT states in the collection, there may be some special processing to compute the values (e.g to consider any advancement in time).

The TMC (1307) receives (from either the real sensors or the data stream synthesisers) a message (1308) tagged for part of the Pipelined DTS. In this example, the message indicates that the state of interest is the sensor for cDT₂ in the DTS. The message is processed, causing the TMC to interact with (acquire the state from) the tagged state (1302). The results of this processing are passed (1310) onto all external consumers of the (analysis) services, including a Synthesiser (1309) in this example. The Synthesiser advances and tags the next digital twin of interest for the next stage of the DTS. In this example, the next state of interest is that of cDT₃. In this case, the consumers (synthesisers) move state from a time t₁ to t₂ and so synthesise the input for the cDT operating at t₂. A tag may be a value added to the data, for example a name, which as illustrated in in Figures 13 and 14, may be "cDT 3" and "cDT 4".

Figure 14 illustrates the next stage of the process of cloning and reducing the impact of initialisation overheads. The Synthesiser (1409) has advanced its input data, which is now tagged for cDTs (1408) (as described above). The TMC now interacts with the (tagged) state of cDTs (1403). In the same manner as described above for Figure 13, the Synthesiser receives results of cDT₃ and tags cDT₄ as the next digital twin of interest. In this manner, the TMC may selectively switch between (pre-stored) states of digital twins. There is no need for a new TMC instance to be created for each individual state of the Pipelined DTS and/or any eDTs; instead, a single TMC instance selectively "pulls" the necessary state information into the TMC instance for processing.

In these examples, the messaging of states and synthesised data may be performed by a message brokering service, for example Apache Kafka. Alternatives, such as RabbitMQ, may of course be used. Such message brokering systems are often built around a "Pub/Sub" model where message producers send (emit) data to named topics, and message consumers receive messages that are relevant to them by subscribing to the appropriate topics (see, for example https://cloud.google.com/pubsub/docs).

Here, a "topic" may refer to a named resource to which messages are sent by publishers. A "subscription" may refer to a named resource representing the stream of messages from a single, specific topic, to be delivered to the subscribing application. A "message" may refer to the combination of data and (optional) attributes that a publisher sends to a topic and is eventually delivered to subscribers.

In these examples, the data streams may be tagged using the concept of topics. The TMC may subscribe to all synthesised data stream topics and use the topic name to process the correct state. If the state is on the Pipelined DTS, the TMC emits its (processed) state onto a topic that is named after the following cDT in the sequence. If the processed state is for an eDT, the TMC emits the state on the eDT's topic. The data synthesiser(s) listen(s) to all topics and emits onto a topic related to the topic of the input data and the source of the data.

### Examples

### Public Transport

The management of bus (and train and tram and water vehicle) public transport networks is currently rigid, with buses operating on fixed routes and to fixed timetables. Variations in actual conditions - traffic, speed of embarkation and disembarkation - mean that the delivered service may be irregular and vehicles across the system may vary from empty to over full. Some public transport authorities may dynamically manage some aspects, for example by adjusting the spacing between buses in real time. A better level of service may be delivered by full dynamic allocation of resources and anticipating problems with services before they occur.

A Pipelined DTS as described here forms the basis of a dynamic bus management system, providing a source of truth about the current state of the buses and the quality of service delivered. Buses are equipped with systems that report their state in real time, such as position, speed etc. These data are combined with other sources of data such as road traffic conditions. The same scenario applies to tram, rail, ferry and other public transport networks.

The sDT and all cDTs contain the following individual twin types (or nodes such as A, B and C in Figures 1 and 2):
**Incident:** These nodes mirror things that may happen to the wider environment that may have an impact on the delivery of the bus service. One type of Incident is the blockage of a part of a road, for reasons such as a traffic accident, road works or utility problems. A blocked road Incident notification is generated by the real management application and location of the blocked region and an expected time to clear. Another type of Incident may be a constriction in part of the road, due to the same problems. Or, an Incident could be the ending of an event (concert) that mean a lot of people are trying to get home at the same time from the same bus stop.

Events from the real world trigger the Incidents to become active. Incidents become inactive in the sDT when notified by the real management application and in the cDTs when the expected clear time is passed or by a cascaded clear notification.

Incidents notify possibly affected Stops of changes to their state (such as the start, end, and location of the Incident).

In order to minimise the number of messages passed between Incidents and Stops, Stops have a bounding box computed. Stop path locations are converted to coordinates and the maximal and minimal values of these computed to form a bounding box and transmitted to Incidents when an Incident is started. The use of eastings and northing for this purpose is known (see https://en.wikipedia.org/wiki/Easting and northing), although of course any coordinate system will be sufficient, such as latitude and longitude. The bounding boxes may overlap, particularly if the stop paths are winding. Incidents communicate their state change only to those Stops whose bounding box contains the Incident.

**Stop:** A Stop represents a bus stop and part of the road network that connects the Stop to the following Stop on the route. A Stop maintains a view of the state of the real road network that it represents; in particular if it is blocked. A Stop also maintains a view of the Runs that use the Stop and, when an Incident that affects the Stop (that is, is within its bounding box), informs the Runs of the Incident.

**Run:** Bus routes have several Runs, the actual track that a bus is timetabled to follow. Runs may be different directions of a route. The Run twin object maintains the actual paths that buses on the Run should follow and updates buses on the Run with any changes. Input data arrives from the appropriate Data Stream (501 or 506, 509) to notify the start of a real bus on a run and the exit of the bus (data is a Bus identifier which is initially generated by the - real - bus). Changes to a Run are received from Stop twins. These changes are a Stop name, ending Stop name and directions that buses must follow (GPS locations and instructions) to reach the Ending Stop. The Run twin distributes these changes to Bus twins registered as being on the Run. The Run twin also receives notifications of changes to Incidents (as a location) and generates rerouting requests so that buses route appropriately around the Incident.

**Bus:** twin of a vehicle on the road driving over a Run. This twin receives location (metres, easting and northing) and speed data (metres/second) from the appropriate Data Stream (501 or 506, 509). The twin also maintains the current path (a route, such as those created by route finding applications, a list of directions and stops that the driver must follow) of the bus. The path may be dynamically updated by other twins in the sDT or cDT like the Run twin in response to Incidents. The reported locations are matched to the current path to ensure that the driver is following the correct route. Changes to the path are transmitted, using interfaces to the Kafka messaging service in Dracena, to the real bus to enable dynamic routing.

The digital twins in the Pipelined DTS are linked by the data flows:
**Path:** as bus Paths change in response to rerouting due to Incidents, generated in the cDT, they are communicated to CDTs later in the chain, without modification by a Data Stream Synthesiser. Planned Incidents, such as road works, may be inserted into cDTs or into the sDT.

**Bus position:** each bus digital twin holds the instantaneous value for the position of a Bus at the (simulation) time of the digital twin. The Data Stream Synthesiser advances this position by the time increment for the subsequent cDT using a speed, dependant on traffic conditions transmitted via a Context source, and the current Path of the bus (received from the previous digital twin).

**Incident development:** State changes pass along the DTS, the state of an Incident within a cDT depends on the simulation time of the cDT

The structure of the DTS built from the sDT and cDTs described above depends on the requirements of the operators and the anticipated accuracy of predictions embedded in the chain (this accuracy will depend on the accuracy of input data, such as passenger and traffic forecasts). The time increment between cDTs is related to the variability of these external data sources, typically the spacing would be 5 minutes with 3 cDTs executing concurrently.

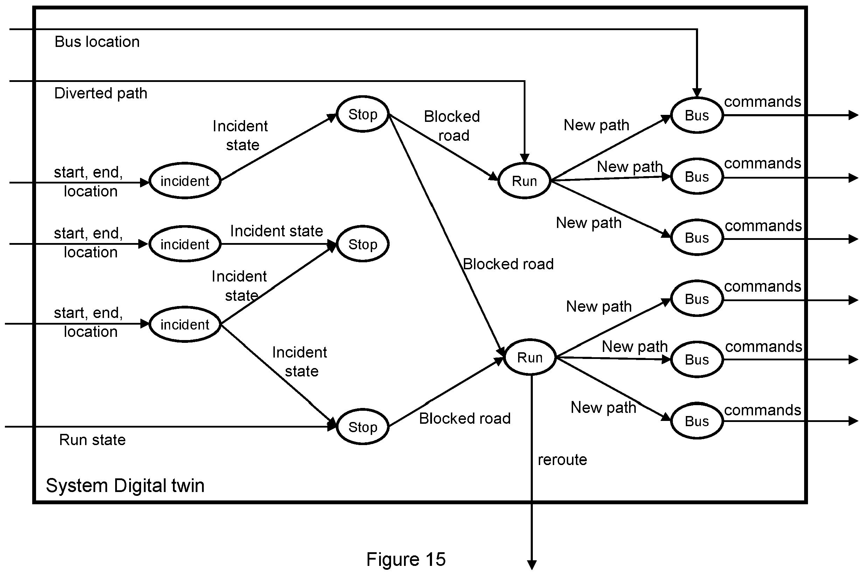

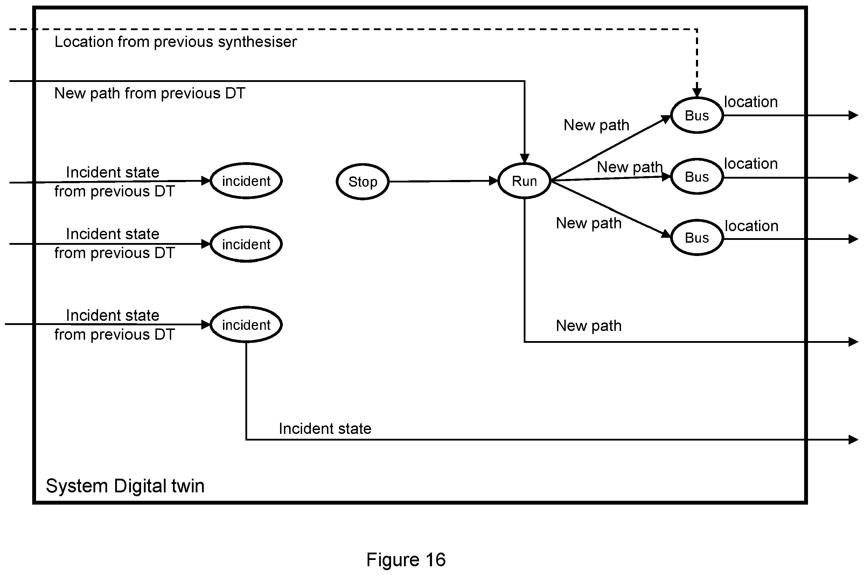

Figures 15 and 16 show a simplified structure for this system. Figure 15 shows a number of instantiations of the object types described above and a few of the data flows. Note that the message flow is directional, and the connections form a DAG with no cycles. The order of the nodes is "Incident", "Stop", "Run", "Bus". Three Incidents affect three different stops. There are blocked roads on two of the stops and this leads to re-routing on two runs, with three buses on each of the two runs following new paths.

Figure 16 shows the additional flow required to connect digital twins into a sequence (the data flows from Figure 15 are still in place, but not all are shown). Here, the clone receives location from the previous synthesizer, a new path from a previous digital twin (source or clone), and Incident states from the previous digital twin. Hence, the effect of the modelling may be a predicted change in routing of a public transport vehicle. This may have the further result of providing a warning, for example to a system operator or user, using a display on a GUI (or app) or even just an audible warning.

An eDT may be used in an example of a public transport DTS to investigate the effects of an action one might take in response to an Incident.

As seen from Figure 9, an eDT is similar to a cDT component of a Pipelined DTS, albeit executing in a different environment. Internal structures of an eDT will therefore remain the same as those discussed in related European patent application publication number EP3985925 A1 and as discussed above. The following is a discussion of how an eDT fits into a higher level application example.

A Pipelined DTS may be created to monitor the delivery of bus services for a Public Transport system. Services in the cDTs may include evaluation of bus operation key performance indicators (KPIs) such as waiting time at Stops.

The services executing on a cDT may detect that road traffic conditions may lead to a blocked road affecting the operation of a Service and informs the operators.

The operators may decide that a solution would be to divert the buses on the service and prepare a number of possible diversions of differing routes.

eDTs may be executed to evaluate the implications of each diversion. A new cDT state is created as a copy of the Pipelined DTS cDT closest to the expected time of application of the diversion for each diversion. A tagged data stream may then be sent to the Synthesiser to initiate eDT execution.

The eDTs evaluate the KPIs included in the Pipelined DTS operation over a length of time.

Based on a comparison of the KPIs for a number of eDTs (that is, for various eDTs executed at different times and/or implementing different actions - such as the different possible diversions of differing routes), the best diversion is implemented
In this way, eDTs offer flexible adaptation to problems in Public Transport systems, such as overcrowding, non-running services, road blockages etc. eDTs may be used to dynamically relocate resources to mitigate these problems by identifying and evaluating the optimal choice of actions to take.

### Other applications

Other application areas include:
- Traffic management for highways. Ensuring good flow of traffic is important for the experience of drivers, the reliability of deliveries travelling on the network, and to increase capacity. The operators may have a number of management strategies to mitigate the effect of an incident on the network, such as imposing variable speed limits, diverting traffic, closing one or more lanes, controlling joining traffic. Each of these options will have a different effect on the incident and the wider road network, which may be evaluated using eDTs.
- Smart cities managing the flow of people and goods through a city by monitoring conditions, dynamically allocating transport resources, and adjusting priorities (traffic lights). A DTS is used to look ahead to anticipate problems, such as congestion or irregular services. eDTs may be used to assess the impact of various different actions taken in response to these problems.
- Power networks ensuring a balanced supply of power across a wide area where the generation includes contributions from many distributed, small scale units (such as domestic solar panels and wind turbines). The time evolution of renewable generation is driven by external data sources (Context, 502 - weather forecasts, day/night cycle). The state of the overall network is also determined by storage facilities, batteries, hydroelectric availability, etc., whose evolution is modelled by Data Stream Synthesisers. eDTs may be used to manage and assess the effect of, for example, power source becoming unexpectedly unavailable.

### Summary

This methodology enhances the power and utility of digital twins of Smart loT driven systems that are characterised as complex networks of dynamically interacting objects. eDTs provide the ability to provide insights into the future evolution of a simulated modelled system following application of some action to the system.

DTSs supplemented with eDTs enable proactive active management of the corresponding physical systems, resulting in, for example, more efficient and less polluting transport networks.

eDTs enable fast and flexible scenario testing; many explorations may execute concurrently with different scenarios, enabling the identification of optimum actions to be taken, for example in response to incidents within the system.

By providing prognosis of the effects of actions on the physical system, the use of eDTs provides better control of complex systems.

The benefits of eDTs may be seen in the area of management of the systems for which the digital twins are avatars. DTSs without eDTs allow the early detection of problems in the underlying systems by maintaining continuously updating twins of the current state and near future states. However, once a problem is detected in these future states the system managers need to formulate a response that will mitigate the impact of the problem. The techniques discussed herein allow options to be tested faster than real time and before implementation by reusing the implementations of the continuously updating twins to create exploratory simulations.

Techniques discussed herein extend previous methods, and enable faster than real time exploratory simulations of the consequences of management actions by reusing the infrastructure for continuous monitoring through Pipelined digital twins.

Techniques discussed extend current digital twin cloning methods to include an alternative method of implementation. These techniques may be used to create a model of the future states of a system by cloning the current state model, and to drive the clone's evolution by replacing real data streams by synthesised data streams. Enhanced cloning techniques are identified, which minimise the impact of initialisation overheads: by selectively switching between stored states, just a single instance of a model computer code (executing a cDT or an eDT) is required.

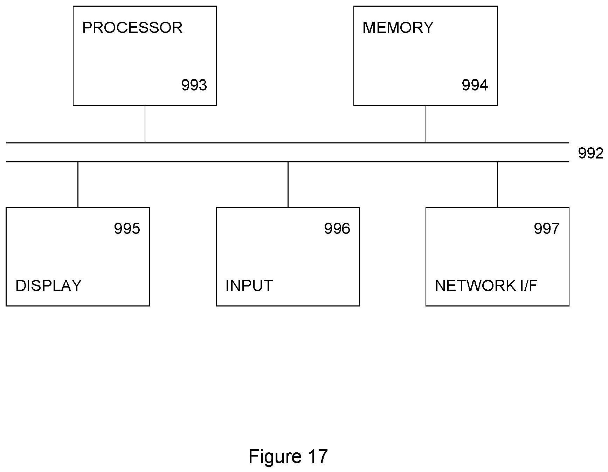

Figure 17 is a block diagram of a computing device, such as a data storage server, which embodies the present invention, and which may be used to implement a method of modelling using a source digital twin, an exploratory digital twin, and one or more clone DTs. The computing device comprises a processor 993, and memory, 994. Optionally, the computing device also includes a network interface 997 for communication with other computing devices, for example with other computing devices of invention embodiments. The computing device may implement one of the platforms mentioned earlier, such as Dracena.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, a term which may refer to a single medium or multiple medium (e.g., a centralized or distributed database and/or associated caches and servers) configured to carry computer-executable instructions or have data structures stored thereon. Computer-executable instructions may include, for example, instructions and data accessible by and causing a general-purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions described here and in the claims. For example, the processor may carry out the steps execute the models of the source digital twins and exploratory digital twins. Additionally or alternatively, the processor may carry out steps that create the exploratory digital twins DTs, or add incidents, such as those described in the examples.

The memory 994 stores data being read and written by the processor 993, for example it may include any database referred to herein, or it may simply store parameters for the models such as positions and speeds of objects being modelled. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device. In one example the display may be used to show a representation of the DTS (for example in graph form) and any eDTs, or of the individual eDTs (for example as tables of states and/or as inputs and outputs). In another example, the display may show a vehicle alert generated, such as a warning of an imminent collision or of traffic, or of a bus delay, and show the impact of an action as determined by an eDT, such as the KPI of a possible diversion.

The network interface (network I/F) 997 may be connected to a network, such as the Internet, and is connectable to other such computing devices via the network, enabling the computing device to access databases as necessary and retrieve real-time data for constructing/updating the digital twins. The network I/F 997 may control data input/output from/to other apparatus via the network. Other peripheral devices such as microphone, speakers, printer, power supply unit, fan, case, etc. may be included in the computing device.

Methods embodying the present invention may be carried out on a computing device such as that illustrated in Figure 17. Such a computing device need not have every component illustrated in Figure 17 and may be composed of a subset of those components. A method embodying the present invention may be carried out by a single computing device in communication with one or more data storage servers via a network. The computing device may be a data storage itself storing modelling data.

A method embodying the present invention may be carried out by a plurality of computing devices and/or loT objects operating in cooperation with one another. One or more of the pluralities of computing devices may be a data storage server storing at least a portion of the modelling data for the digital twins.

## Claims

1. A method of predicting evolution of simulation results for an Internet of Things, loT, network, comprising:
creating a source digital twin for the loT network, driven by real-time sensed data from objects fed to models of the objects, the source digital twin outputting a state of one or more of the objects in real time;
forming a main digital twin sequence by:
additionally creating one or more clone digital twins, each including the same models and interconnections as the source digital twin;
connecting an input of a first clone digital twin with an output of the source digital twin via a data stream synthesizer node, wherein the data stream synthesizer node adds a time increment to the output of the source digital twin so that the source digital twin drives the first clone digital twin at the incremented time to produce an evolved state of the source digital twin; and
connecting an input of any further clone digital twin with an output of a preceding clone digital twin in the sequence via a further data stream synthesizer node, wherein the further data stream synthesizer node adds a further time increment to the output of the preceding clone digital twin so that the preceding clone digital twin drives the further clone digital twin at the further incremented time to produce a further evolved state of the source digital twin;
creating an exploratory digital twin, which includes the same models and interconnections as the source digital twin;
connecting an input of the exploratory digital twin with an output of one of: the source digital twin, the first clone digital twin, and any further clone digital twin, to initialise the exploratory digital twin;
modifying an aspect of the exploratory digital twin to simulate an action taken on the exploratory digital twin;
connecting an output of the exploratory digital twin with an input of the exploratory digital twin via an additional data stream synthesizer node, wherein the additional data stream synthesizer node adds an additional time increment to the output of the exploratory digital twin to drive the exploratory digital twin at the additionally incremented time; and
executing the source digital twin, any clone digital twin, and the exploratory digital twin to provide an evolved modified state of one or more of the objects at the additionally incremented time as the output of the exploratory digital twin.

2. The method according to claim 1, wherein the models of objects in the source digital twin are interconnected as object nodes in a directed acyclic graph, DAG, with interconnections representing flow of data, and wherein:
the source digital twin also includes event nodes modelling events which affect the loT network, such as incidents which have an impact on the state of the objects; and/or
the source digital twin also includes system information nodes modelling information about the loT network.

3. The method according to any of the preceding claims, wherein the models of objects in the source digital twin are interconnected as object nodes in a directed acyclic graph, DAG, with interconnections representing flow of data, the method further comprising creating a service node as part of the overall DAG at the output of the source digital twin and/or at the output of the exploratory digital twin and/or the output of any clone digital twin, the service node producing a data service based on the state of an object in the loT network, optionally wherein
the service node is provided in parallel with the data stream synthesizer at the source digital twin and/or with the additional data stream synthesizer at the exploratory digital twin, and further comprising feeding the output of the source digital twin to both the service node and the data stream synthesizer and/or feeding the output of the exploratory digital twin to both the service node and the additional data stream synthesizer.

4. The method according to any of the preceding claims, further comprising:
creating a further exploratory digital twin, which includes the same models and interconnections as the source digital twin;
connecting an input of the further exploratory digital twin with an output of one of: the source digital twin, the first clone digital twin, and any further clone digital twin, to initialise the further exploratory digital twin;
modifying an aspect of the further exploratory digital twin to simulate an action taken on the second exploratory digital twin;
connecting an output of the further exploratory digital twin to an input of the further exploratory digital twin via another additional data stream synthesizer node, wherein the another additional data stream synthesizer node adds another additional time increment to the output of the further exploratory digital twin so that the further exploratory digital twin drives the further exploratory digital twin at the another additional incremented time;
executing the further exploratory digital twin to provide an evolved state of one or more of the objects at the another additional incremented time as the output of the further exploratory digital twin; and
comparing the output of the exploratory digital twin and the output of the further exploratory digital twin.

5. The method according to claim 4, wherein:
the input of the further exploratory digital twin is connected to the same output as connected to the input of the exploratory digital twin; and
the action taken on the further exploratory digital twin is different from the action taken on the exploratory digital twin.

6. The method according to claim 4, wherein:
the input of the further exploratory digital twin is connected to a different output from the input of the exploratory digital twin; and preferably
the action taken on the further exploratory digital twin is the same as the action taken on the exploratory digital twin.

7. The method according to any of the preceding claims, wherein context information from an external data source is additionally input into the source digital twin and/or into any exploratory digital twin and/or into any clone digital twin.

8. The method according to any of the preceding claims, wherein executing any exploratory digital twin comprises executing repeatedly to provide a plurality of evolved modified states of one or more of the objects at repeatedly incremented times as the output of the exploratory digital twin.

9. The method according to any of the preceding claims, wherein executing the source digital twin and any clone digital twin occurs following real-time, and executing any exploratory digital twin occurs in faster than real-time.

10. The method according to any of the preceding claims, wherein creating the exploratory digital twin and, optionally, any clone digital twin comprises:
using the same code as for the source digital twin;
inputting a state into the code which corresponds to a current state of the digital twin;
executing the digital twin; and
replacing the current state of the digital twin with the resultant state after execution.

11. The method according to any of the preceding claims, wherein the loT network is a traffic network, and the object nodes include vehicle nodes and/or one or more infrastructure nodes and one or more event nodes are included, such as a traffic incident node.

12. The method according to any of the preceding claims, wherein the state of one or more of the objects includes one or more of: position of the object and speed of the object.

13. The method according to claim 11 or 12, wherein the traffic network is a public transport network, and the nodes in the source digital twin and any exploratory digital twin and, optionally, any clone digital twin include vehicle nodes, incident nodes representing events that may have an effect on the public transport network, stop nodes representing a section of the public transport network infrastructure, and system information nodes representing the path of the vehicle.

14. A computer program comprising instructions which, when the program is executed by a computer, cause the computer to carry out any of the methods of any preceding claim.

15. A computer comprising a processor, a network interface and a memory comprising instructions which when executed cause the computer to carry out the method of any of claims 1 to 13.

## Patentansprüche

1. Verfahren zum Vorhersagen der Entwicklung von Simulationsergebnissen für ein Internet der Dinge, IoT, - Netzwerk, umfassend:
Erstellen eines digitalen Quellzwillings für das loT-Netzwerk, angetrieben durch in Echtzeit erfasste Daten von Objekten, die in Modelle der Objekte eingespeist werden, wobei der digitale Quellzwilling einen Zustand von einem oder mehreren der Objekte in Echtzeit ausgibt;
Bilden einer digitalen Zwillings-Hauptsequenz durch:
zusätzliches Erstellen eines oder mehrerer digitaler Klonzwillinge, die jeweils die gleichen Modelle und Verbindungen beinhalten wie der digitale Quellzwilling;
Verbinden einer Eingabe eines ersten digitalen Klonzwillings mit einer Ausgabe des digitalen Quellzwillings über einen Datenstromsyntheseknoten, wobei der Datenstromsyntheseknoten ein Zeitinkrement zu der Ausgabe des digitalen Quellzwillings hinzufügt, sodass der digitale Quellzwilling den ersten digitalen Klonzwilling zu der inkrementierten Zeit antreibt, um einen entwickelten Zustand des digitalen Quellzwillings zu produzieren; und
Verbinden einer Eingabe eines beliebigen weiteren digitalen Klonzwillings mit einer Ausgabe eines vorhergehenden digitalen Klonzwillings in der Sequenz über einen weiteren Datenstromsyntheseknoten, wobei der weitere Datenstromsyntheseknoten ein weiteres Zeitinkrement zu der Ausgabe des vorhergehenden digitalen Klonzwillings hinzufügt, sodass der vorhergehende digitale Klonzwilling den weiteren digitalen Klonzwilling zu der weiteren inkrementierten Zeit antreibt, um einen weiterentwickelten Zustand des digitalen Quellzwillings zu produzieren;
Erstellen eines explorativen digitalen Zwillings, der die gleichen Modelle und Verbindungen beinhaltet wie der digitale Quellzwilling;
Verbinden einer Eingabe des explorativen digitalen Zwillings mit einer Ausgabe des digitalen Quellzwillings, des ersten digitalen Klonzwillings und eines beliebigen weiteren digitalen Klonzwillings, um den explorativen digitalen Zwilling zu initialisieren;
Modifizieren eines Aspekts des explorativen digitalen Zwillings, um eine auf den explorativen digitalen Zwilling vorgenommene Aktion zu simulieren;
Verbinden einer Ausgabe des explorativen digitalen Zwillings mit einer Eingabe des explorativen digitalen Zwillings über einen zusätzlichen Datenstromsynthesizerknoten, wobei der zusätzliche Datenstromsynthesizerknoten ein zusätzliches Zeitinkrement zu der Ausgabe des explorativen digitalen Zwillings hinzufügt, um den explorativen digitalen Zwilling zu der zusätzlich inkrementierten Zeit anzutreiben; und
Ausführen des digitalen Quellzwillings, jedes digitalen Klonzwillings und des explorativen digitalen Zwillings, um einen weiterentwickelten modifizierten Zustand eines oder mehrerer der Objekte zu der zusätzlich inkrementierten Zeit als die Ausgabe des explorativen digitalen Zwillings bereitzustellen.

2. Verfahren nach Anspruch 1, wobei die Modelle von Objekten im digitalen Quellzwilling als Objektknoten in einem gerichteten azyklischen Graphen (DAG) miteinander verbunden sind, wobei die Verbindungen den Fluss von Daten darstellen, und wobei:
der digitale Quellzwilling auch Ereignisknoten beinhaltet, die Ereignisse modellieren, die das loT-Netzwerk betreffen, wie etwa Vorfälle, die einen Einfluss auf den Zustand der Objekte aufweisen; und/oder
der digitale Quellzwilling auch Systeminformationsknoten beinhaltet, die Informationen über das loT-Netzwerk modellieren.

3. Verfahren nach einem der vorhergehenden Ansprüche, wobei die Modelle von Objekten in dem digitalen Quellzwilling als Objektknoten in einem gerichteten azyklischen Graphen (DAG) miteinander verbunden sind, wobei die Verbindungen den Fluss von Daten darstellen, wobei das Verfahren ferner Erstellen eines Dienstknotens als Teil des gesamten DAG an der Ausgabe des digitalen Quellzwillings und/oder an der Ausgabe des explorativen digitalen Zwillings und/oder der Ausgabe eines beliebigen digitalen Klonzwillings umfasst, wobei der Dienstknoten einen Datendienst produziert, der auf dem Zustand eines Objekts in dem loT-Netzwerk basiert, wobei optional der Dienstknoten parallel zu dem Datenstromsynthesizer an dem digitalen Quellzwilling und/oder zu dem zusätzlichen Datenstromsynthesizer an dem explorativen digitalen Zwilling bereitgestellt wird, und ferner das Zuführen der Ausgabe des digitalen Quellzwillings zu sowohl dem Dienstknoten als auch dem Datenstromsynthesizer und/oder das Zuführen der Ausgabe des explorativen digitalen Zwillings zu sowohl dem Dienstknoten als auch dem zusätzlichen Datenstromsynthesizer umfasst.

4. Verfahren nach einem der vorhergehenden Ansprüche, ferner umfassend:
Erstellen eines weiteren explorativen digitalen Zwillings, der die gleichen Modelle und Verbindungen beinhaltet wie der digitale Quellzwilling;
Verbinden einer Eingabe des Weiteren explorativen digitalen Zwillings mit einer Ausgabe von einem von: dem digitalen Quellzwilling, dem ersten digitalen Klonzwilling und jedem weiteren digitalen Klonzwilling, um den weiteren explorativen digitalen Zwilling zu initialisieren;
Modifizieren eines Aspekts des Weiteren explorativen digitalen Zwillings, um eine auf den zweiten explorativen digitalen Zwilling vorgenommene Aktion zu simulieren;
Verbinden einer Ausgabe des weiteren explorativen digitalen Zwillings mit einer Eingabe des weiteren explorativen digitalen Zwillings über einen weiteren zusätzlichen Datenstromsyntheseknoten, wobei der weitere zusätzliche Datenstromsyntheseknoten ein weiteres zusätzliches Zeitinkrement zu der Ausgabe des weiteren explorativen digitalen Zwillings hinzufügt, sodass der weitere explorative digitale Zwilling den weiteren explorativen digitalen Zwilling zu dem weiteren zusätzlichen inkrementierten Zeitpunkt antreibt;
Ausführen des weiteren explorativen digitalen Zwillings, um einen weiterentwickelten Zustand eines oder mehrerer der Objekte zu einem weiteren zusätzlichen inkrementierten Zeitpunkt als die Ausgabe des weiteren explorativen digitalen Zwillings bereitzustellen; und
Vergleichen der Ausgabe des explorativen digitalen Zwillings und der Ausgabe des weiteren explorativen digitalen Zwillings.

5. Verfahren nach Anspruch 4, wobei:
die Eingabe des weiteren explorativen digitalen Zwillings mit derselben Ausgabe verbunden ist, die mit der Eingabe des explorativen digitalen Zwillings verbunden ist; und
sich die Aktion, die auf dem weiteren explorativen digitalen Zwilling vorgenommen wird, von der Aktion unterscheidet, die auf dem explorativen digitalen Zwilling vorgenommen wird.

6. Verfahren nach Anspruch 4, wobei:
die Eingabe des Weiteren explorativen digitalen Zwillings mit einer unterschiedlichen Ausgabe als die Eingabe des explorativen digitalen Zwillings verbunden ist; und vorzugsweise die auf dem weiteren explorativen digitalen Zwilling ausgeführte Aktion dieselbe ist, wie die auf dem explorativen digitalen Zwilling vorgenommene Aktion.

7. Verfahren nach einem der vorhergehenden Ansprüche, wobei Kontextinformationen aus einer externen Datenquelle zusätzlich in den digitalen Quellzwilling und/oder in einen explorativen digitalen Zwilling und/oder in einen digitalen Klonzwilling eingegeben werden.

8. Verfahren nach einem der vorhergehenden Ansprüche, wobei Ausführen eines explorativen digitalen Zwillings wiederholtes Ausführen umfasst, um eine Vielzahl von weiterentwickelten modifizierten Zuständen eines oder mehrerer der Ziele zu wiederholt inkrementierten Zeiten als die Ausgabe des explorativen digitalen Zwillings bereitzustellen.

9. Verfahren nach einem der vorhergehenden Ansprüche, wobei Ausführen des digitalen Quellzwillings und jedes digitalen Klonzwillings in Echtzeit erfolgt und Ausführen jedes explorativen digitalen Zwillings schneller als in Echtzeit erfolgt.

10. Verfahren nach einem der vorhergehenden Ansprüche, wobei Erstellen des explorativen digitalen Zwillings und optional jedes digitalen Klonzwillings folgendes umfasst:
Verwenden des gleichen Codes wie für den digitalen Quellzwilling;
Eingeben eines Zustands in den Code, der einem aktuellen Zustand des digitalen Zwillings entspricht;
Ausführen des digitalen Zwillings; und
Ersetzen des aktuellen Zustands des digitalen Zwillings durch den resultierenden Zustand nach dem Ausführen.

11. Verfahren nach einem der vorhergehenden Ansprüche, wobei das loT-Netzwerk ein Verkehrsnetzwerk ist und die Objektknoten Fahrzeugknoten und/oder einen oder mehrere Infrastrukturknoten beinhalten und ein oder mehrere Ereignisknoten beinhaltet sind, wie etwa ein Knoten für Verkehrsstörungen.

12. Verfahren nach einem der vorhergehenden Ansprüche, wobei der Zustand eines oder mehrerer der Objekte eines oder mehrere der folgenden beinhaltet: Position des Objekts und Geschwindigkeit des Objekts.

13. Verfahren nach Anspruch 11 oder 12, wobei das Verkehrsnetzwerk ein öffentliches Transportnetzwerk ist und die Knoten in dem digitalen Quellzwilling und jedem explorativen digitalen Zwilling und optional jedem digitalen Klonzwilling Fahrzeugknoten, Ereignisknoten, die Ereignisse aufweisen, die eine Auswirkung auf das öffentliche Transportnetzwerk haben können, Haltestellenknoten, die einen Abschnitt der Infrastruktur des öffentlichen Transportnetzwerks darstellen, und Systeminformationsknoten, die den Weg des Fahrzeugs darstellen, beinhalten.

14. Computerprogramm, das Anweisungen umfasst, die, wenn das Programm von einem Computer ausgeführt wird, den Computer veranlassen, eines der Verfahren eines der vorhergehenden Ansprüche auszuführen.

15. Computer, umfassend einen Prozessor, eine Netzwerkschnittstelle und einen Speicher, der Anweisungen umfasst, die, wenn sie ausgeführt werden, den Computer veranlassen, das Verfahren nach einem der Ansprüche 1 bis 13 auszuführen.

## Revendications

1. Procédé de prédiction de l'évolution de résultats de simulation pour un réseau d'Internet des objets, IoT, comprenant :
la création d'un jumeau numérique source pour le réseau IoT, entraîné par des données détectées en temps réel provenant d'objets transmises à des modèles des objets, le jumeau numérique source délivrant un état d'un ou de plusieurs des objets en temps réel ;
la formation d'une séquence principale de jumeau numérique :
en créant en outre un ou plusieurs jumeaux numériques clones, chacun comportant les mêmes modèles et interconnexions que le jumeau numérique source ;
en connectant une entrée d'un premier jumeau numérique clone à une sortie du jumeau numérique source via un noeud synthétiseur de flux de données, dans lequel le noeud synthétiseur de flux de données ajoute un incrément de temps à la sortie du jumeau numérique source de sorte que le jumeau numérique source entraîne le premier jumeau numérique clone à l'instant incrémenté pour produire un état évolué du jumeau numérique source ; et
en connectant une entrée d'un quelconque jumeau numérique clone supplémentaire à une sortie d'un jumeau numérique clone précédent dans la séquence via un noeud synthétiseur de flux de données supplémentaire, dans lequel le noeud synthétiseur de flux de données supplémentaire ajoute un incrément de temps supplémentaire à la sortie du jumeau numérique clone précédent de sorte que le jumeau numérique clone précédent entraîne le jumeau numérique clone supplémentaire à l'instant incrémenté supplémentaire pour produire un état évolué supplémentaire du jumeau numérique source ;
la création d'un jumeau numérique exploratoire, qui comporte les mêmes modèles et interconnexions que le jumeau numérique source ;
la connexion d'une entrée du jumeau numérique exploratoire à une sortie de l'un : du jumeau numérique source, du premier jumeau numérique clone et d'un quelconque jumeau numérique clone supplémentaire, pour initialiser le jumeau numérique exploratoire ;
la modification d'un aspect du jumeau numérique exploratoire pour simuler une action entreprise sur le jumeau numérique exploratoire ;
la connexion d'une sortie du jumeau numérique exploratoire à une entrée du jumeau numérique exploratoire via un noeud synthétiseur de flux de données supplémentaire, dans lequel le noeud synthétiseur de flux de données supplémentaire ajoute un incrément de temps supplémentaire à la sortie du jumeau numérique exploratoire pour entraîner le jumeau numérique exploratoire à l'instant incrémenté supplémentaire ; et
l'exécution d'un jumeau numérique source, d'un quelconque jumeau numérique clone et du jumeau numérique exploratoire pour fournir un état modifié évolué d'un ou de plusieurs des objets à un instant incrémenté supplémentaire en tant que sortie du jumeau numérique exploratoire.

2. Procédé selon la revendication 1, dans lequel les modèles d'objets dans le jumeau numérique source sont interconnectés en tant que noeuds d'objet dans un graphe acyclique orienté, DAG, avec des interconnexions représentant un flux de données, et dans lequel :
le jumeau numérique source comporte également des noeuds d'événement modélisant des événements qui affectent le réseau IoT, tels que des incidents qui ont un impact sur l'état des objets ; et/ou
le jumeau numérique source comporte également des noeuds d'informations système modélisant des informations concernant le réseau IoT.

3. Procédé selon l'une quelconque des revendications précédentes, dans lequel les modèles d'objets dans le jumeau numérique source sont interconnectés en tant que noeuds d'objet dans un graphe acyclique orienté, DAG, avec des interconnexions représentant un flux de données, le procédé comprenant en outre la création d'un noeud de service en tant que partie du DAG global à la sortie du jumeau numérique source et/ou à la sortie du jumeau numérique exploratoire et/ou à la sortie d'un quelconque jumeau numérique clone, le noeud de service produisant un service de données sur la base de l'état d'un objet dans le réseau IoT, éventuellement dans lequel
le noeud de service est fourni en parallèle avec le synthétiseur de flux de données au niveau du jumeau numérique source et/ou avec le synthétiseur de flux de données supplémentaire au niveau du jumeau numérique exploratoire, et comprenant en outre l'envoi de la sortie du jumeau numérique source à la fois au noeud de service et au synthétiseur de flux de données et/ou l'envoi de la sortie du jumeau numérique exploratoire à la fois au noeud de service et au synthétiseur de flux de données supplémentaire.

4. Procédé selon l'une quelconque des revendications précédentes, comprenant en outre :
la création d'un jumeau numérique exploratoire supplémentaire, qui comporte les mêmes modèles et interconnexions que le jumeau numérique source ;
la connexion d'une entrée du jumeau numérique exploratoire supplémentaire à une sortie de l'un : du jumeau numérique source, du premier jumeau numérique clone et d'un quelconque jumeau numérique clone supplémentaire, pour initialiser le jumeau numérique exploratoire supplémentaire ;
la modification d'un aspect du jumeau numérique exploratoire supplémentaire pour simuler une action entreprise sur le second jumeau numérique exploratoire ;
la connexion d'une sortie du jumeau numérique exploratoire supplémentaire à une entrée du jumeau numérique exploratoire supplémentaire via un autre noeud synthétiseur de flux de données supplémentaire, dans lequel l'autre noeud synthétiseur de flux de données supplémentaire ajoute un autre incrément de temps supplémentaire à la sortie du jumeau numérique exploratoire supplémentaire de sorte que le jumeau numérique exploratoire supplémentaire entraîne le jumeau numérique exploratoire supplémentaire à l'autre instant incrémenté supplémentaire ;
l'exécution du jumeau numérique exploratoire supplémentaire pour fournir un état évolué d'un ou de plusieurs des objets à l'autre instant incrémenté supplémentaire en tant que sortie du jumeau numérique exploratoire supplémentaire ; et
la comparaison de la sortie du jumeau numérique exploratoire et de la sortie du jumeau numérique exploratoire supplémentaire.

5. Procédé selon la revendication 4, dans lequel :
l'entrée du jumeau numérique exploratoire supplémentaire est connectée à la même sortie que celle connectée à l'entrée du jumeau numérique exploratoire ; et
l'action entreprise sur le jumeau numérique exploratoire supplémentaire est différente de l'action entreprise sur le jumeau numérique exploratoire.

6. Procédé selon la revendication 4, dans lequel :
l'entrée du jumeau numérique exploratoire supplémentaire est connectée à une sortie différente de l'entrée du jumeau numérique exploratoire ; et de préférence
l'action entreprise sur le jumeau numérique exploratoire supplémentaire est la même que l'action entreprise sur le jumeau numérique exploratoire.

7. Procédé selon l'une quelconque des revendications précédentes, dans lequel les informations contextuelles provenant d'une source de données externe sont en outre entrées dans le jumeau numérique source et/ou dans un quelconque jumeau numérique exploratoire et/ou dans un quelconque jumeau numérique clone.

8. Procédé selon l'une quelconque des revendications précédentes, dans lequel l'exécution d'un quelconque jumeau numérique exploratoire comprend une exécution répétée pour fournir une pluralité d'états modifiés évolués d'un ou de plusieurs des objets à des instants incrémentés de manière répétée en tant que sortie du jumeau numérique exploratoire.

9. Procédé selon l'une quelconque des revendications précédentes, dans lequel l'exécution du jumeau numérique source et d'un quelconque jumeau numérique clone se produit suivant le temps réel, et l'exécution d'un quelconque jumeau numérique exploratoire se produit plus rapidement qu'en temps réel.

10. Procédé selon l'une quelconque des revendications précédentes, dans lequel la création du jumeau numérique exploratoire et éventuellement, d'un quelconque jumeau numérique clone comprend :
l'utilisation du même code que pour le jumeau numérique source ; l'entrée d'un état dans le code qui correspond à un état actuel du jumeau numérique ;
l'exécution du jumeau numérique ; et
le remplacement de l'état actuel du jumeau numérique par l'état résultant après l'exécution.

11. Procédé selon l'une quelconque des revendications précédentes, dans lequel le réseau IoT est un réseau de trafic, et les noeuds d'objet comportent des noeuds de véhicule et/ou un ou plusieurs noeuds d'infrastructure et un ou plusieurs noeuds d'événement sont inclus, tels qu'un noeud d'incident de trafic.

12. Procédé selon l'une quelconque des revendications précédentes, dans lequel l'état d'un ou de plusieurs des objets comporte l'une ou plusieurs : de la position de l'objet et de la vitesse de l'objet.

13. Procédé selon la revendication 11 ou 12, dans lequel le réseau de trafic est un réseau de transport public, et les noeuds dans le jumeau numérique source et un quelconque jumeau numérique exploratoire et, éventuellement, un quelconque jumeau numérique clone comportent des noeuds de véhicule, des noeuds d'incident représentant des événements qui peuvent avoir un effet sur le réseau de transport public, des noeuds d'arrêt représentant une section de l'infrastructure du réseau de transport public et des noeuds d'informations système représentant le trajet du véhicule.

14. Programme informatique comprenant des instructions qui, lorsque le programme est exécuté par un ordinateur, amènent l'ordinateur à exécuter l'un quelconque des procédés selon une quelconque revendication précédente.

15. Ordinateur comprenant un processeur, une interface réseau et une mémoire comprenant des instructions qui, lorsqu'elles sont exécutées, amènent l'ordinateur à exécuter le procédé selon l'une quelconque des revendications 1 à 13.
